# EUROPEAN PATENT APPLICATION

(11) **EP 4 588 597 A1**
(43) Date of publication of application: **23.07.2025**
(21) Application number: 24210570.8
(22) Date of filing: 04.11.2024
(51) Int. Cl.: B23B 31/173

(54) **CHUCK ASSEMBLY FOR A ROTARY POWER TOOL**

(30) Priority: 03.11.2023 US 202363596007 P; 12.08.2024 US 202463682204 P
(71) Applicant: Milwaukee Electric Tool Corporation, Brookfield, WI 53005-2550 (US)
(72) Inventor: Albrecht, Devin C., Hartford, Wisconsin 53027 (US)
(74) Representative: Grünecker Patent- und Rechtsanwälte PartG mbB

(57) **Abstract**

A chuck assembly (410) for a rotary power tool includes a body (434) rotatable about a central axis, the body including a plurality of openings and a first set of threads (467), a plurality of jaws (38) received within the plurality of openings in the body; a collar (442) surrounding the body, the collar including a stepped portion configured to engage the plurality of jaws to limit radial movement of the plurality of jaws, a second set of threads (562) coupled for co-rotation with the collar and engageable with the first set of threads on the body such that rotation of the collar relative to the body causes the collar to move axially along the body, and a spring (496) biasing the collar such that the stepped portion is biased into engagement with the plurality of jaws.

## Description

### CROSS-REFERENCE TO RELATED APPLICATIONS

This application claims priority to co-pending U.S. Provisional Application No. 63/596,007, filed November 3, 2023, and to co-pending U.S. Provisional Application No. 63/682,204, filed August 12, 2024, the entire contents of each of which is incorporated herein by reference.

### FIELD

The present disclosure relates to power tools and, more particularly, to chuck assemblies for rotary power tools.

### BACKGROUND

Power tools having a rotational output (i.e. rotary power tools) typically include chuck assemblies with a plurality of jaws that are adjustable to grip and secure a tool bit (e.g., a drill bit). Some chuck assemblies are configured to accept a continuous range of bit sizes (referred to herein as "continuously variable chucks"). Other chuck assemblies, also commonly known as bit holders, are configured to accept one standard size of hex-shanked bits. By taking advantage of a standard shank geometry, such chuck assemblies can be optimized to reduce weight, size, manufacturing cost, and time required to change bits as compared to continuously variable chucks. However, multiple standard nominal sizes exist for hex-shanked bits. For example, 1/4-inch hex bits are commonly used for fastener driver, drill, and accessory bits, 3/8-inch hex bits are commonly used for hole saw bits, and 7/16-inch hex bits may be used for higher torque applications. The actual outer width dimension of such hex bits may be slightly different than the nominal size. For example, nominal 3/8-inch hex bits may have an actual out width dimension of 11/32-inch.

### SUMMARY

A need exists for a chuck assembly able to accept multiple standard sized bit shanks without suffering the disadvantages of continuously variable chucks.

In some aspects, the techniques described herein relate to a chuck assembly for a rotary power tool, the chuck assembly including: a body rotatable about a central axis, the body including a plurality of openings and a first set of threads; a plurality of jaws received within the plurality of openings in the body; a collar surrounding the body, the collar including a stepped portion configured to engage the plurality of jaws to limit radial movement of the plurality of jaws; a second set of threads coupled for co-rotation with the collar and engageable with the first set of threads on the body such that rotation of the collar relative to the body causes the collar to move axially along the body; and a spring biasing the collar such that the stepped portion is biased into engagement with the plurality of jaws.

In some aspects, the techniques described herein relate to a chuck assembly, further including a plate coupled for co-rotation with the collar, the plate including a central aperture, wherein the body extends through the central aperture.

In some aspects, the techniques described herein relate to a chuck assembly, wherein the second set of threads is formed in the plate about a periphery of the central aperture.

In some aspects, the techniques described herein relate to a chuck assembly, wherein the spring has a first end that engages the body and a second end that engages the plate.

In some aspects, the techniques described herein relate to a chuck assembly, wherein the spring is a conical coil spring.

In some aspects, the techniques described herein relate to a chuck assembly, wherein the plate has a non-uniform thickness.

In some aspects, the techniques described herein relate to a chuck assembly, wherein the plate has a greater thickness proximate the central aperture than proximate an outer periphery of the plate.

In some aspects, the techniques described herein relate to a chuck assembly, wherein each thread of the second set of threads includes a recess configured to receive an end of a respective thread of the first set of threads.

In some aspects, the techniques described herein relate to a chuck assembly, wherein an axial movement of the collar is limited when the end of the respective thread is received in the recess.

In some aspects, the techniques described herein relate to a chuck assembly, wherein each jaw of the plurality of jaws includes a stepped outer surface engageable with the stepped portion of the collar.

In some aspects, the techniques described herein relate to a chuck assembly for a rotary power tool, the chuck assembly including: a body rotatable about a central axis, the body including a plurality of openings and an external threaded portion; a plurality of jaws received within the plurality of openings in the body; a collar surrounding the body, the collar including a stepped portion configured to engage the plurality of jaws; a plate coupled for co-rotation with the collar, the plate having an internal threaded portion configured to engage the external threaded portion of the body such that, when engaged, rotation of the collar and the plate relative to the body causes the collar and the plate to move axially along the body; and a locking assembly configured to selectively prevent rotation of the collar and the plate relative to the body.

In some aspects, the techniques described herein relate to a chuck assembly, further including a sleeve surrounding the collar, the sleeve rotatable with respect to the collar for a first distance and rotatable together with the collar when the sleeve is rotated a distance greater than the first distance.

In some aspects, the techniques described herein relate to a chuck assembly, further including a rotation limiter coupled to the body, the rotation limiter including an arm extending along the external threaded portion and engageable with the internal threaded portion of the plate to limit the rotation of the plate.

In some aspects, the techniques described herein relate to a chuck assembly, further including a spring biasing the collar such that the stepped portion is biased into engagement with the plurality of jaws, and wherein the spring is a conical spring.

In some aspects, the techniques described herein relate to a chuck assembly, wherein the locking assembly includes: a ratchet plate having a plurality of ratchet teeth formed on an outer surface of the ratchet plate; a pawl ring positioned within the collar, the pawl ring including a plurality of pawl arms configured to engage the plurality of ratchet teeth of the ratchet plate; and a plurality of lifter arms coupled to the sleeve, the plurality of lifter arms configured to disengage the pawl arms from the plurality of ratchet teeth in response to rotation of the sleeve, wherein the locking assembly includes a locked state in which the pawl arms engage the plurality of ratchet teeth and rotation of the collar relative to the body is permitted in a first direction about the central axis and prevented in a second direction opposite a first direction about the central axis; wherein the locking assembly includes an unlocked in which the locking arms move the pawl arms out of engagement with the plurality of ratchet teeth and rotation of the collar relative to the body is permitted in both the first direction and the second direction about the central axis.

In some aspects, the techniques described herein relate to a chuck assembly, wherein the locking assembly includes: a plurality of first teeth formed on the plate; a locking plate coupled to the body for co-rotation, the locking plate movable axially along the body, the locking plate including a plurality of second teeth configured to selectively engage the plurality of first teeth; and a locking spring biasing the locking plate along the central axis to contact the plate.

In some aspects, the techniques described herein relate to a chuck assembly, wherein rotation of the collar with a torque greater than a torque threshold causes the locking plate to move axially away from the plate against the bias of the locking spring, allowing the plurality of first teeth to slip over the plurality of second teeth.

In some aspects, the techniques described herein relate to a chuck assembly for a rotary power tool, the chuck assembly including: a body rotatable about a central axis, the body including a plurality of openings and a plurality of sizing groove sets formed on the body, each sizing groove set including a plurality of helical grooves; a plurality of jaws received within the plurality of openings in the body; a collar surrounding the body, the collar configured to rotate around the central axis and move axially along the central axis relative to the body, the collar configured to engage the plurality of jaws; and a plurality of projections coupled to the collar and configured to move with the collar relative to the body, wherein the plurality of projections is configured to engage the plurality of sizing groove sets.

In some aspects, the techniques described herein relate to a chuck assembly, wherein each of the plurality of sizing groove sets includes an axial groove extending through the plurality of helical grooves.

In some aspects, the techniques described herein relate to a chuck assembly, wherein each projection of the plurality of projections is configured to slide along the axial groove of a respective one of the plurality of sizing groove sets when the collar moves axially along the central axis.

In some aspects, the techniques described herein relate to a chuck assembly, wherein a bottom surface of the plurality of helical grooves is textured.

In some aspects, the techniques described herein relate to a chuck assembly, wherein the plurality of projections is formed on a washer coupled to the collar.

In some aspects, the techniques described herein relate to a chuck assembly, further including a locking assembly configured to selectively inhibit rotation of the collar.

In some aspects, the techniques described herein relate to a chuck assembly, wherein the body includes a plurality of ratchet teeth, and wherein the locking assembly includes a locking ring having a cantilevered arm engageable with the plurality of ratchet teeth.

In some aspects, the techniques described herein relate to a chuck assembly, wherein the locking assembly including a locking pin movable in a radial direction toward the central axis to press the cantilevered arm into engagement with the plurality of ratchet teeth.

In some aspects, the techniques described herein relate to a chuck assembly, further including a sleeve coupled to the collar, wherein the locking pin is movable in the radial direction in response to rotation of the sleeve relative to the collar.

In some aspects, the techniques described herein relate to a chuck assembly, wherein the plurality of projections includes a plurality of pins coupled for co-rotation with the collar.

Other features and aspects of the disclosure will become apparent by consideration of the following detailed description and accompanying drawings.

### BRIEF DESCRIPTION OF THE DRAWINGS

FIG. 1 is a perspective view of a chuck assembly according to an embodiment of the disclosure.
FIG. 2 is a perspective view of an exemplary tool bit that can be retained by the chuck assembly of FIG. 1.
FIG. 3 is a diagram illustrating three different nominal sizes of shanks that may be used on the tool bit of FIG. 2.
FIG. 4 is a cut away perspective view of the chuck assembly according to an embodiment of the disclosure.
FIG. 5 is a perspective view of the chuck assembly of FIG. 1 with a collar removed.
FIG. 6 is a perspective view of a body of the chuck assembly of FIG. 1.
FIG. 7 is a perspective view of a jaw of the chuck assembly of FIG. 1.
FIG. 8 is a perspective view of a positioning washer of the chuck assembly of FIG. 1.
FIG. 9A is a side section view of the chuck assembly of FIG. 1 in a first position.
FIG. 9B is a side section view of the chuck assembly of FIG. 1 in a second position.
FIG. 9C is a side section view of the chuck assembly of FIG. 1 in a third position.
FIG. 10 is a perspective view of a chuck assembly according to another embodiment of the disclosure.
FIG. 11 is a side view of a body of the chuck assembly of FIG. 10.
FIG. 12A is a rear section view of a locking assembly of the chuck assembly of FIG. 10 in a locked configuration.
FIG. 12B is a rear section view of the locking assembly of the chuck assembly of FIG. 10 in an intermediate configuration.
FIG. 12C is a rear section view of the locking assembly of the chuck assembly of FIG. 10 in an unlocked configuration.
FIG. 13 is a perspective view of a locking ring of the chuck assembly of FIG. 10.
FIG. 14 is a perspective view of a chuck assembly according to another embodiment of the disclosure.
FIG. 15 is a cross-sectional view of the chuck assembly of FIG. 14.
FIG. 16 is a perspective view of the chuck assembly of FIG. 14 with a collar removed.
FIG. 17 is a perspective view of a body of the chuck assembly of FIG. 14.
FIG. 18 is a perspective view of a positioning plate of the chuck assembly of FIG. 14.
FIG. 19 is a section view of the collar of the chuck assembly of FIG. 14.
FIG. 20A is a side section view of the chuck assembly of FIG. 14 in a first position.
FIG. 20B is a side section view of the chuck assembly of FIG. 14 in a second position.
FIG. 20C is a side section view of the chuck assembly of FIG. 14 in a third position.
FIG. 20D is a perspective section view of the chuck assembly of FIG. 14 in the third position.
FIG. 21 is a perspective view of a chuck assembly according to another embodiment of the disclosure.
FIG. 22A is a section view along a line 22A-22A of the collar of the chuck assembly of FIG. 21.
FIG. 22B is a rear view of the chuck assembly of FIG. 21.
FIG. 23 is a perspective view of the chuck assembly of FIG. 21 with a collar assembly removed.
FIG. 24 is a section view of a rotatable sleeve of the collar assembly of the chuck assembly of FIG. 21.
FIG. 25 is a perspective view of a collar of the collar assembly of the chuck assembly of FIG. 21.
FIG. 26 is a perspective view of a body of the chuck assembly of FIG. 21.
FIG. 27 is a perspective view of a plate of the chuck assembly of FIG. 21.
FIG. 28 is a perspective view of a rotation limiter of the chuck assembly of FIG. 21.
FIG. 29A is a perspective view of a pawl ring of the chuck assembly of FIG. 21.
FIG. 29B is a perspective view of a pawl ring according to another embodiment of the disclosure.
FIG. 29C is another perspective view of another pawl ring according to another embodiment of the disclosure.
FIG. 30 is a perspective view of a chuck assembly according to another embodiment of the disclosure.
FIG. 31 is a section view along a line 31-31 of the collar of the chuck assembly of FIG. 30.
FIG. 32 is a side view of the chuck assembly of FIG. 30 with a collar assembly removed.
FIG. 33 is a perspective view of a plate of the chuck assembly of FIG. 30.
FIG. 34 is a perspective view of a ratchet plate of the chuck assembly of FIG. 30.
FIG. 35 is a perspective view of a chuck assembly according to another embodiment of the disclosure.
FIG. 36 is a section view along a line 36-36 of the collar of the chuck assembly of FIG. 35.
FIG. 37 is a perspective view of the chuck assembly of FIG. 35 with a collar removed.
FIG. 38 is a perspective view of a plate of the chuck assembly of FIG. 35.
FIG. 39 is a perspective view of a locking plate of the chuck assembly of FIG. 35.
FIG. 40 is a section view of a chuck assembly according to another embodiment of the disclosure.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways.

### DETAILED DESCRIPTION

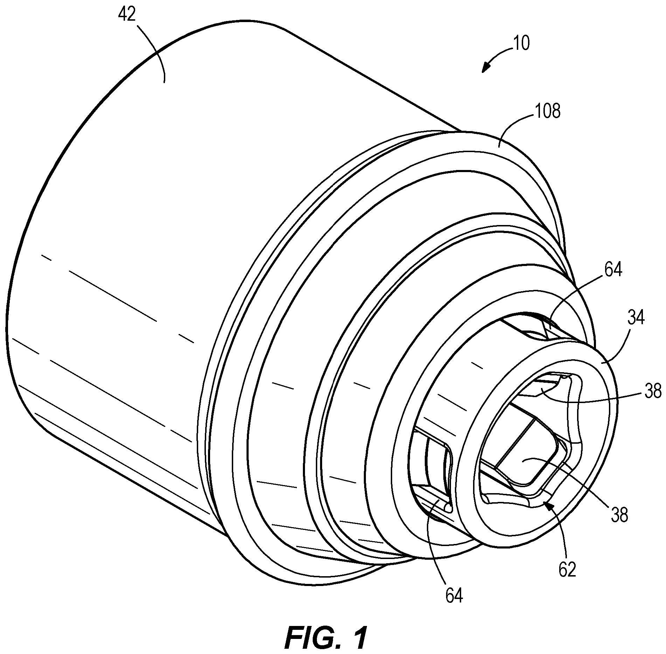

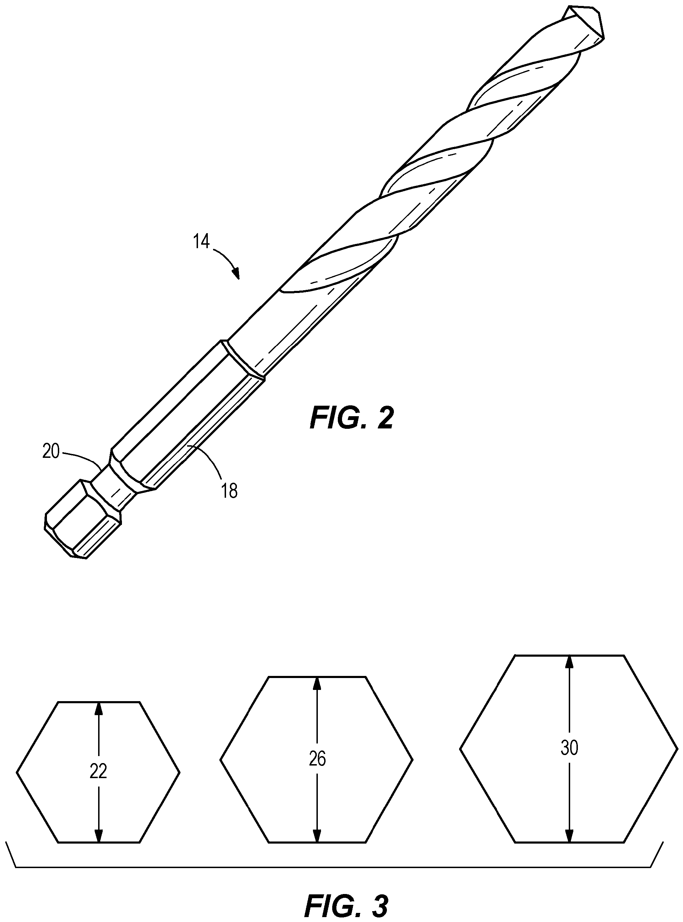

FIG. 1 illustrates a chuck assembly 10 according to an embodiment of the present disclosure. The chuck assembly 10 may be connected to an output member (e.g., a spindle, anvil, etc.; not shown) of a rotary power tool (e.g., a drill, impact driver, etc.; not shown) for co-rotation with the output member. The illustrated chuck assembly 10 is configured to quickly receive and secure tool bits (e.g., drill bits, screwdriver bits, etc.) with standardized shanks of at least two (e.g., three) different predetermined, nominal sizes. For example, the illustrated chuck assembly 10 is configured to receive a tool bit 14 with a hexagonal shank 18 that can be any one of a first nominal size 22, a second nominal size 26, and a third nominal size 30 (FIGS. 2 and 3). The first, second, and third nominal sizes 22, 26, 30 are preferably standard or commonly used hexagonal shank sizes, such as 1/4-inch, 3/8-inch, and 7/16-inch. The chuck assembly 10 may be configured to receive tool bits with other types of shanks (e.g., square, three-flat, round, etc.). In addition, the chuck assembly 10 may be configured to receive tool bits of four or more different nominal shank sizes. The hexagonal shank 18 further includes a groove 20 configured to engage a portion of the chuck assembly 10 to limit axial movement.

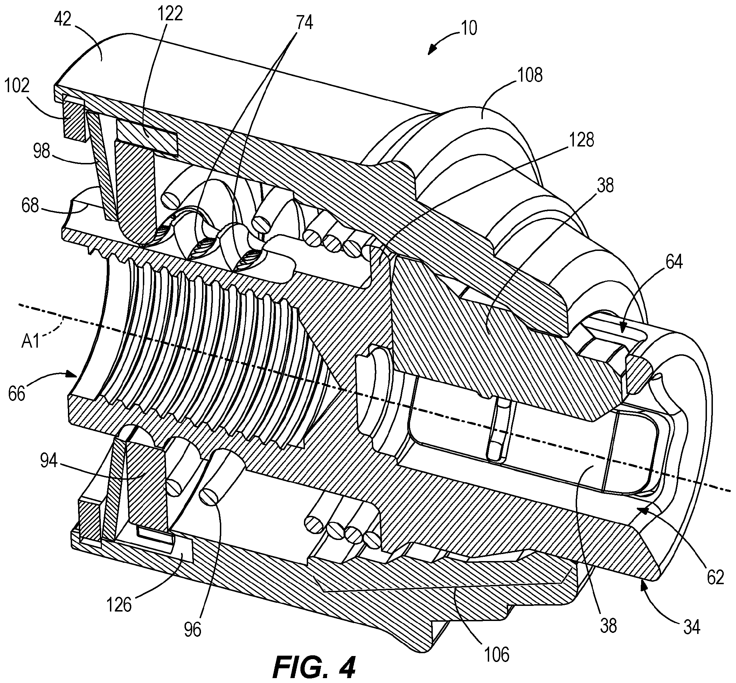

With reference to FIG. 4, the chuck assembly 10 includes a body 34, a plurality of jaws 38, and a collar 42. The body 34 is coupled for co-rotation with the output member of the power tool about a central axis A1. The jaws 38 are configured to engage the shank 18 of the tool bit 14 to couple the tool bit 14 for co-rotation with the body 34. The illustrated chuck assembly 10 includes three jaws 38; however, the chuck assembly 10 may include other numbers of jaws 38 in other embodiments. As described in greater detail below, the collar 42 is selectively rotatable about the central axis A1 and axially slidable along the central axis A1 in order to release or retain the tool bit 14 within the chuck assembly 10.

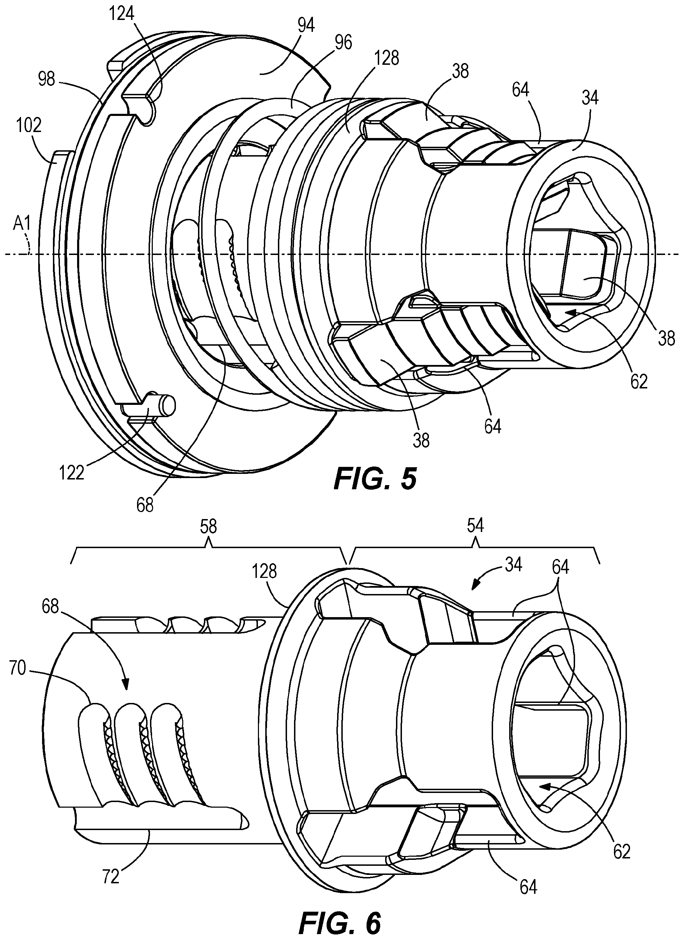

As shown in FIG. 5-6, the body 34 includes a head portion 54 and a shaft portion 58. The head portion 54 includes a tool bit aperture 62 configured to receive the tool bit 14 and a plurality of openings 64 disposed circumferentially about the head portion 54. In the illustrated embodiment, the tool bit aperture 62 is hexagonally shaped in a plane perpendicular to the axis A1, but in other embodiments the tool bit aperture 62 can be square, triangular, or round. Each of the openings 64 receives a corresponding one of the jaws 38 such that each jaw 38 is configured to move radially inwardly or outwardly within its associated tool bit aperture 62. The shaft portion 58 includes a bore 66 (FIG. 4) configured to receive the output member and a plurality of sizing groove sets 68 (FIGS. 5-6) spaced circumferentially about the shaft portion 58. In the illustrated embodiment, the bore 66 includes threads to engage the output member of the rotary tool, but in other embodiments other connection methods can be used (e.g., a spline, press fit, mechanical fasteners, etc.) to couple the body 34 to the output member for co-rotation.

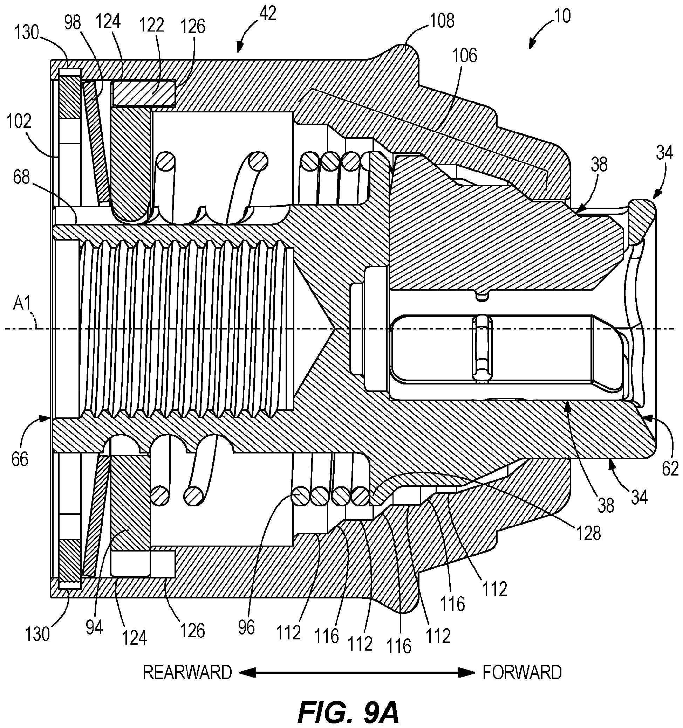

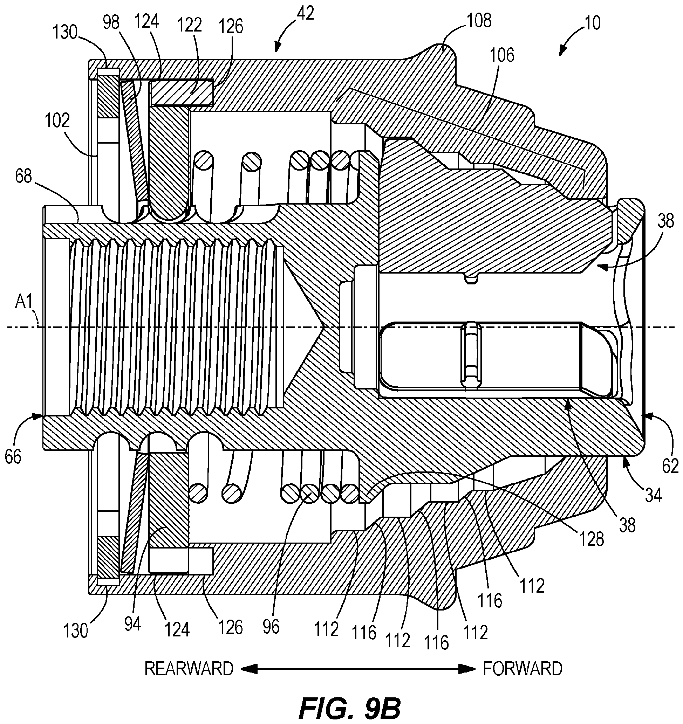

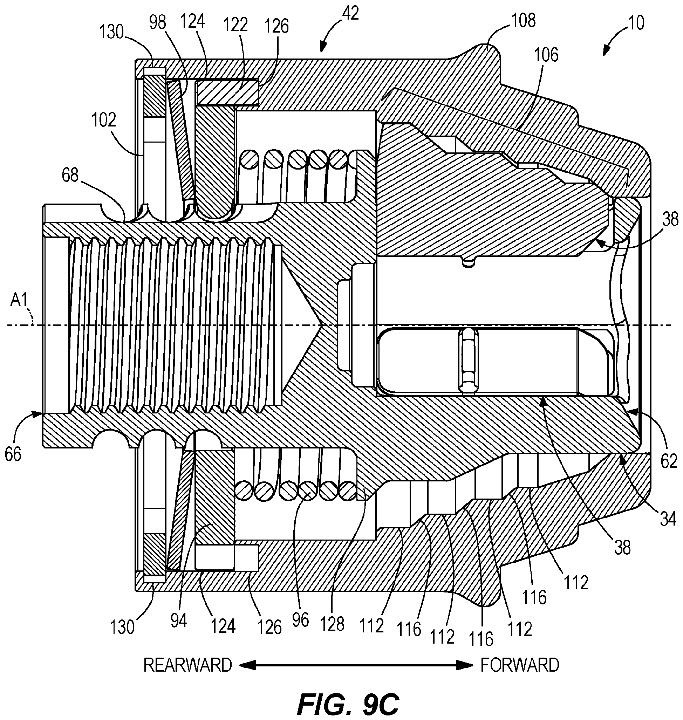

Each of the illustrated sizing groove sets 68 comprises a plurality of (e.g., three) helical grooves 70 and an axial slot 72 extending through each of the helical grooves 70 (FIG. 6). The sizing groove sets 68 are configured to hold the collar 42 in one of three axial positions (FIGS. 9A-C), corresponding to one of the three helical grooves 70, as further detailed below. In other embodiments, the sizing groove sets 68 can includes a different number of helical grooves 70 to hold the collar 42 in fewer than three axial positions or more than three axial positions. In the illustrated embodiment, the bottom surfaces of the helical grooves 70 include a textured surface 74 (FIG. 5), which provides audio and tactile feedback as the collar 42 is moved.

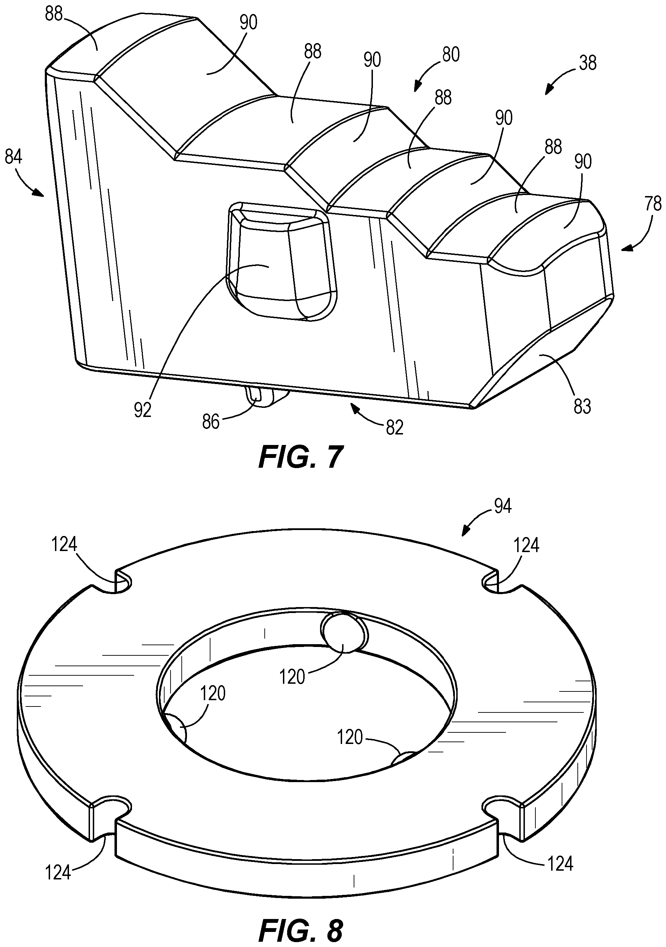

As shown in FIG. 7, each of the jaws 38 has a front end or tip 78, an outer side 80 extending rearwardly from the tip 78, a tool-engaging side 82 extending parallel to the axis A1 and configured to engage the shank 18 of the tool bit 14, and an angled surface extending at an oblique angle between the tool-engaging side 82 and the tip 78. A rear side 84 of each jaw 38 extends between the outer side 80 and the tool-engaging side 82. The rear side 84 may be oriented at an oblique angle relative to the tool-engaging side 82.

With continued reference to FIG. 7, the tool engaging side 82 further includes a projecting rib 86 able to engage the groove 20 of the tool bit 14, in order to axially retain the tool bit 14. The outer side 80 of each jaw 38 has a generally stepped shape defined by a plurality of flat surfaces 88 (or treads) oriented generally parallel to the central axis A1 alternating with a plurality of inclined surfaces 90 (or risers) oriented at an oblique angle relative to the central axis A1. In some embodiments, the flat surfaces 88 may be formed with a draft angle such that the flat surfaces 88 do not extend parallel to the central axis A1 but rather define an angle with the central axis A1 that is smaller than the oblique angle of the inclined surfaces 90. The illustrated jaws 38 also include a pair of laterally extending ears 92 that are received within a portion of each of the openings 64 to prevent movement of the jaws 38 along the central axis A1.

Referring again to FIG. 4, the collar 42 of the chuck assembly 10 surrounds the body 34. The collar 42 includes a jaw engaging portion 106 on an interior side of the collar 42 and a user engageable portion 108 on an exterior side of the collar 42. The jaw engaging portion 106 includes a plurality of flat surfaces 112 and a plurality of inclined surfaces 116, and both the inclined surfaces 116 are configured to engage some combination of the inclined surfaces 90 of the jaws 38. The user engageable portion 108 extends from collar 42 and is configured to facilitate a user grasping the collar 42 to apply an axial force to move the collar 42 along the central axis A1.

With continued reference to FIG. 4, the illustrated chuck assembly 10 further includes a positioning washer 94, a coil spring 96, a spring washer 98 (e.g., a Belleville washer), and a retaining ring 102, each surrounded by the collar 42. The positioning washer 94, shown in more detail in FIG. 8, is ring-shaped and includes a plurality of projections 120 formed on its inner circumference and a plurality of slots 124 formed on its outer circumference. The projections 120 are received by the sizing groove sets 68 of the body 34 and are configured move within the helical grooves 70 of the sizing groove sets 68. The pin slots 124 are configured to receive pins 122, which extend into pin receiving openings 126 of the collar 42. When the pins 122 thus couple the positioning washer 94 for co-rotation with the collar 42.

The coil spring 96 has a first end pressed against the positioning washer 94 and a second end pressed against a flanged portion 128 of the body 34. The coil spring 96 biases the positioning washer 94, and with it, the collar 42, in a rearward (axial) direction. The spring washer 98 has an inner portion pressed against the position washer 94 on a side opposite the coil spring 96 and an outer portion pressed against the retaining ring 102, which is positioned in a retaining ring groove 130 of the collar 42. In this way, the spring washer 98 axially retains the positioning washer 94.

In use, to load a tool bit, such as the tool bit 14, into the chuck assembly 10, the user rotates the collar 42 in a loosening direction (e.g., counterclockwise) about the central axis A1 to move the projections 120 of the positioning washer 94 from the helical groves 70 to the axial slot 72. The rotation of the collar 42 in the loosening direction may be limited by the projections 120 impacting a wall of the axial slot 72 opposite the helical grooves 70.

Next, the user engages the user engageable portion 108 or any portion of the collar 42 and moves the collar 42 forward along the central axis A1 as far as allowed by the chuck assembly 10 (e.g., to an extent limited by a length of the slots 72). As the collar 42 is moved forward, clearance is formed between the jaw engaging portion 106 and the outer sides 80 of the jaws 38. The user can then insert the shank 18 of the tool bit 14 into the tool bit aperture 62 of the body 34.

As the tool bit 14 is inserted, the rear end of the shank 18 engages the angled surfaces 83 of the jaws 38 to displace the jaws 38 outwardly enough to accommodate the outer dimension of the shank 18. The shank 18 may then be fully inserted into the chuck assembly 10. Once inserted, the user may release the collar 42, which moves rearward under the influence of the coil spring 96. In the illustrated embodiment, the collar 42 moves rearward into one of the three positions depicted by FIGS. 9A-C, which each correspond respectively to the first, second, and third nominal sizes 22, 26, 30 of the shank 18 of the tool bit 14. As the collar 42 moves rearward, the engaging inclined surfaces 116 of the collar 42 engage the inclined surfaces 90 of the jaws 38 to moves the jaws 38 radially inward within the tool bit aperture 62 to a position corresponding with one of the first, second, or third nominal sizes 22, 26, 30. The jaws 38 will continue to move radially inward until the tool engaging side 82 contacts the tool bit 14. Additionally, the projecting rib 86 engages the groove 20 in the tool bit 14, which limits axial movement of the tool bit 14 in the chuck assembly 10.

Once the jaws 38 engage the tool bit 14 and if the shank 18 of the tool bit 14 is compatible with the chuck assembly 10 (has a shank size matching one of the three nominal sizes 22, 26, 30), the user can rotate the collar 42 in a tightening direction (e.g., clockwise) around the central axis A1. The clockwise rotation of the collar 42 also rotates the projections 120 of the positioning washer 94 from the slots 72 into one of the helical grooves 70 corresponding to the size 22, 26, 30 of the inserted bit shank 18. As the projections 120 move within the helical grooves 70, the positioning washer 94 and the collar 42 move rearward. The additional rearward movement causes the jaw engaging portion 106 of the collar 42 to apply additional clamping force to the outer sides 80 of the jaws 38, which further results in the jaws 38 moving radially inward. The additional radial movement of the jaws 38 causes the jaws 38 to tighten around the tool bit 14, to better retain the tool bit 14 within the chuck assembly 10.

In the illustrated embodiment, when the projections 120 move in the helical grooves 70, the projections 120 contact the textured surface 74, which produces audible and/or tactile feedback. The audible and/or tactile feedback alerts the user that the projections 120 have successfully entered the helical grooves 70 and that chuck assembly 10 is further tightening around the tool bit 14. The textured surface 74 may also increase rolling resistance of the projections 120 along the helical grooves 70 to inhibit inadvertent loosening of the collar 42 (e.g., if the body 34 is rotating and comes to a sudden stop).

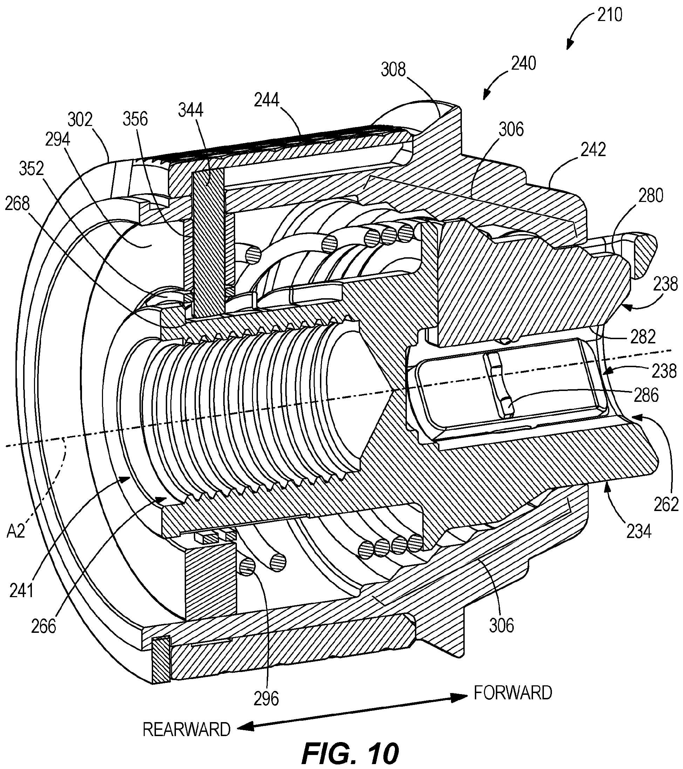

FIGS. 10-13 illustrate another embodiment of a chuck assembly 210 configured to quickly receive and secure tool bits with standard sized shanks of three different predetermined, nominal sizes (e.g., 1/4-inch, 3/8-inch, and 7/16-inch). In other embodiments, the chuck assembly may receive and secure tool bits with two standard sized shanks, or four or more standard sized shanks. The chuck assembly 210 is similar in some aspects to the chuck assembly 10, with like parts having like reference numerals plus "200." Accordingly, the following description focuses primarily on differences between the chuck assembly 210 and the chuck assembly 10.

The illustrated chuck assembly 210 includes a body 234, a plurality of jaws 238, a collar assembly 240, and a locking assembly 241. The body 234 receives a portion of the tool bit 14 and is coupled for co-rotation with the output member of the power tool. The plurality of jaws 238 is configured to engage a portion of the shank 18 and retain the tool bit 14. The collar assembly 240 surrounds the body 234 and is axially movable and rotatable relative to the body 234, to a limited extent, to selectively clamp the jaws 238 on the shank 18 of the tool bit 14 and to selectively release the jaws 238 to permit removal of the tool bit 14. As described in greater detail below, the locking assembly 241 prevents inadvertent loosening of the jaws 238 by inhibiting rotation of the collar assembly 240 relative to the body 234. For example, the locking assembly 241 may provide an inertial locking function, able to prevent the collar assembly 240 from continuing to rotate when the body 234 is rotating and then comes to a sudden stop.

FIGS. 10-11 illustrate the body 234 of the chuck assembly 210. The body 234 includes a head portion 254, a shaft portion 258, and a flanged portion 328 defining an interface between the head and shaft portions 254, 258. The head portion 254 includes a tool bit aperture 262 (FIG. 10) to receive the tool bit 14 and a plurality of openings 264 for each of the jaws 238. The shaft portion 258 includes a bore 266 configured to receive the output member (e.g., spindle) of the power tool, a plurality of sizing grooves 268 and a plurality of ratchet teeth 276. Each of the plurality of sizing grooves 268 is circumferentially spaced apart from one another and comprises an axial slot 270 and a plurality (e.g., three) of helical grooves 272. The sizing grooves 268 are configured to receive a portion of the locking assembly 241, as discussed further below. The ratchet teeth 276 are split into three group with each group positioned in between the sizing grooves 268. The ratchet teeth 276 are configured to engage a portion of the locking assembly 241, as discussed further below. The flanged portion 328 is configured to retain one end of a coil spring 296. The coil spring 296 is configured to bias the collar assembly 240 in a rearward direction.

Referring to FIG. 10, the collar assembly 240 includes a collar 242 and a rotatable sleeve 244. The collar 242 i on an exterior side. Surfaces of the jaw engaging portion 306 are configured to engage an outer portion 280 of each of the jaws 238 based on the axial position of the collar assembly 240, in the same manner as described above with respect to the chuck assembly 10.

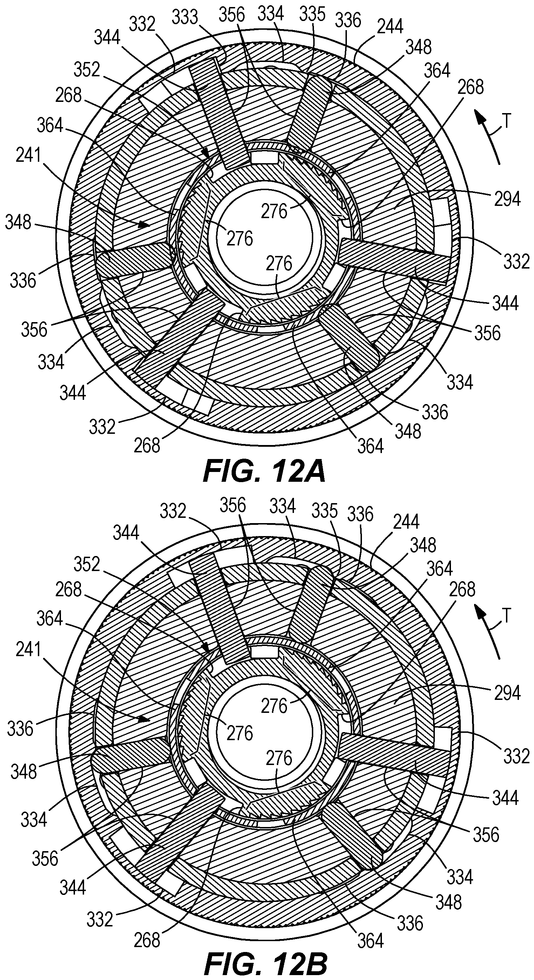

The rotatable sleeve 244 is configured to rotate about the central axis A2 and is positioned around the collar 242 between the user engageable portion 308 and a retaining ring 302. An exterior surface of the rotatable sleeve 244 is knurled to provide the user additional grip. With reference to FIG. 12A, an interior surface of the rotatable sleeve 244 includes a plurality of first slots 332, a plurality of second slots 334 (also referred to as deeper locking pin slots), and a plurality of third slots 336 (also referred to as shallower locking pin slots). Each plurality of first, second, and third slots 332, 334, and 336 is spaced circumferentially apart from one another on the interior surface of the rotatable sleeve 244. In the illustrated embodiment, the rotatable sleeve 244 is made of a lightweight polymer material (e.g., Nylon, polypropylene, ABS, or the like) to reduce the mass and corresponding rotational inertia of the collar assembly 240. The illustrated collar 242 is made of steel for high strength to be able to apply a clamping force to the jaws 238. In other embodiments, the sleeve 244 and the collar 242 may be made of the same or different materials.

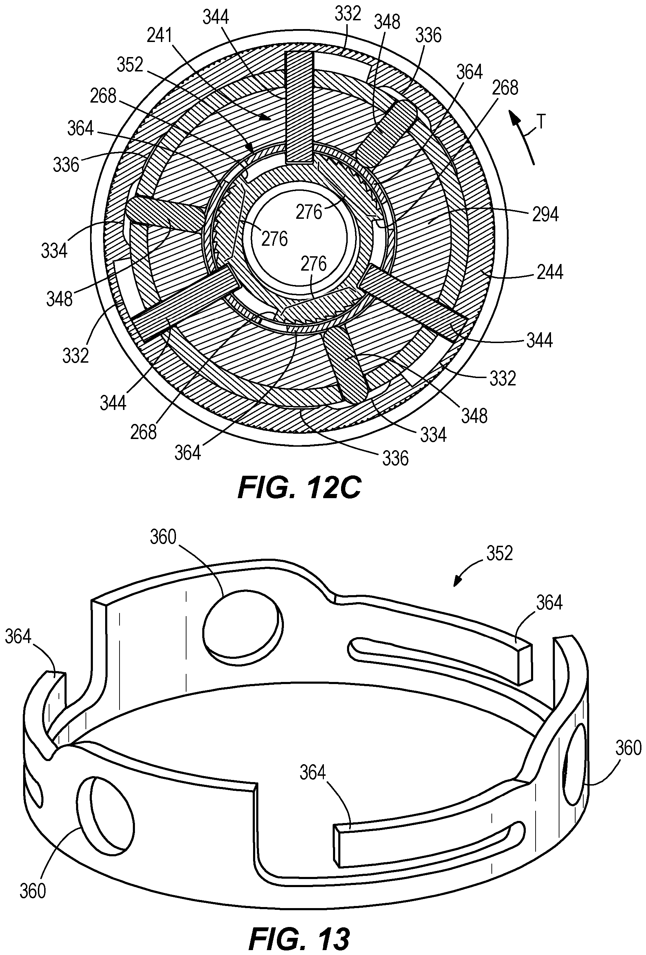

FIG 12A-13 illustrates the locking assembly 241 in more detail. The illustrated locking assembly 241 includes a locked configuration (FIG. 12A), an unlocked configuration (FIG. 12C), and a plurality of intermediate positions (one of which is shown in FIG. 12B).

In the locked configuration, the locking assembly 241 prevents rotation of the collar 242 relative to the body 234, which in turn prevents the jaws 238 from loosening away from the tool bit 14. In the unlocked configuration, the locking assembly 241 allows the user to rotate the collar 242 in the loosening direction to remove the tool bit 14. The locking assembly 241 also has intermediate positions when transitioning between the unlocked and locked positions.

The illustrated locking assembly 241 includes a positioning washer 294, a plurality of first pins 344 (also referred to as projections), a plurality of second pins 348 (also referred to as locking pins), and a locking ring 352. The positioning washer 294 surrounds the shaft portion 258 of the body 234 and includes a plurality of pin apertures 356 configured to receive the pins 344, 348, thereby constraining the pins 344, 348 to permit only radial sliding movement of the pins 344, 348.

The first pins 344 extend from the first slots 332 of the sleeve 244 into the sizing grooves 268 of the body 234 and are coupled for co-rotation and axial movement with the collar 242 and the positioning washer 294. The first pins (i.e., projections) 344 interface with the sizing grooves 268 in the same manner as the projections 120 of the chuck assembly 10 described above. The locking pins 348 extend from either the unlocked or locked locking pin slots 334, 336 of the rotatable sleeve 244 and into engagement with the locking ring 352. Similar to the first pins 344, the locking pins 348 are coupled for co-rotation and axial movement with the collar 242. The locking pins 344 are also radially movable in response to rotation of the sleeve 244 relative to the collar 242.

In the illustrated embodiment, the unlocked pressure pin slot 334 is shallower than the locked pressure pin slot 336, and the inner surface of the sleeve 244 defines a cam profile having a peak 335 between the two slots 336. Accordingly, as the sleeve 244 is rotated from the unlocked position (FIG. 12C) to the locked position (FIG. 12A), the locking pins 348 are pressed inwardly by the contour of the cam profile, and the locking pins 348 in turn exert pressure on the locking ring 352, as described below.

The illustrated locking ring 352 is positioned between the body 234 and the positioning washer 294. As shown in FIG. 13, the locking ring 352 includes a plurality of second pin apertures 360 and a plurality of cantilevered arms 364. The second pin apertures 360 receive the first pins 344 therethrough, such that the locking ring 352 is coupled for co-rotation with the collar 242. The cantilevered arms 364 are elastically deformed inward to engage the ratchet teeth 276 of the body 234, when engaged by the locking pins 348 (FIG. 12A). To form the locking ring 352, a spring like material (e.g., spring steel) is stamped and rolled into a cylindrical form. In other embodiments, the spring like material may be laser cut, die formed, or formed in various other ways.

In use, to load a tool bit such as the tool bit 14 into the chuck assembly 210, the user begins with the locking assembly 241 in the unlocked configuration (FIG. 12C). Next, the user engages the user engageable portion 308 or any portion of the collar assembly 240 and moves the collar assembly 240 forward along the central axis A2 as far as allowed by the chuck assembly 210 (e.g., to an extent limited by the length of the slots 270). As the collar assembly 240 is moved forward, clearance is formed between the jaw engaging portion 306 and an outer portion 280 of each of the jaws 238. The user can then insert the shank 18 of the tool bit 14 into the tool bit aperture 262 of the body 234. As the tool bit 14 is inserted, the rear end of the shank 18 engage the jaws 238 to displace the jaws 238 outwardly enough to accommodate the outer dimension of the shank 18. The shank 18 may then be fully inserted into the chuck assembly 210. Once inserted, the user may release the collar assembly 240, which moves rearward under the influence of the coil spring 296. As the collar assembly 240 moves rearward, the jaw engaging portion 306 bears against the jaws 238 to move the jaws 238 radially inward within the tool bit aperture 262 to a position corresponding with one of the first, second, or third nominal sizes 22, 26, 30. The jaws 238 will continue to move radially inward until a tool engaging side 282 contacts the tool bit 14. Additionally, a projecting rib 286 (FIG. 10) engages the groove 20 in the tool bit 14, which limits axial movement of the tool bit 14 in the chuck assembly 210.

Once the jaws 238 engage the tool bit 14 the user can rotate the rotatable sleeve 244 in a tightening direction T (e.g., counterclockwise, in the orientation of FIG. 12C) around the central axis A2. The sleeve 244 initially rotates relative to the first pins 344, with the slots 332 define lost motion regions. As the sleeve 244 rotates, the locking pins 348 travel along the cam profile inside the sleeve 244 until the outer ends of the locking pins 348 reach the peak 335 of the cam profile (FIG. 12B). At this point, the user will encounter an increased rotational resistance when continuing to rotate the sleeve 244 in the tightening direction T. The cam profile displaces the locking pins 348 radially inwardly against the biasing force of the cantilevered arms 364, thereby bending the arms 364 inwardly and into engagement with the ratchet teeth 276 on the body 234. As the user continues to rotate the sleeve 244 in the tightening direction T, the locking pins 348 clear the peak 335 of the cam profile and enter the shallower locking pin slots 336, which hold the locking pins 348 at a radial position in which the cantilevered arms 364 remain engaged with the ratchet teeth 276 (FIG. 12A), thereby placing the locking assembly 241 in the locked configuration.

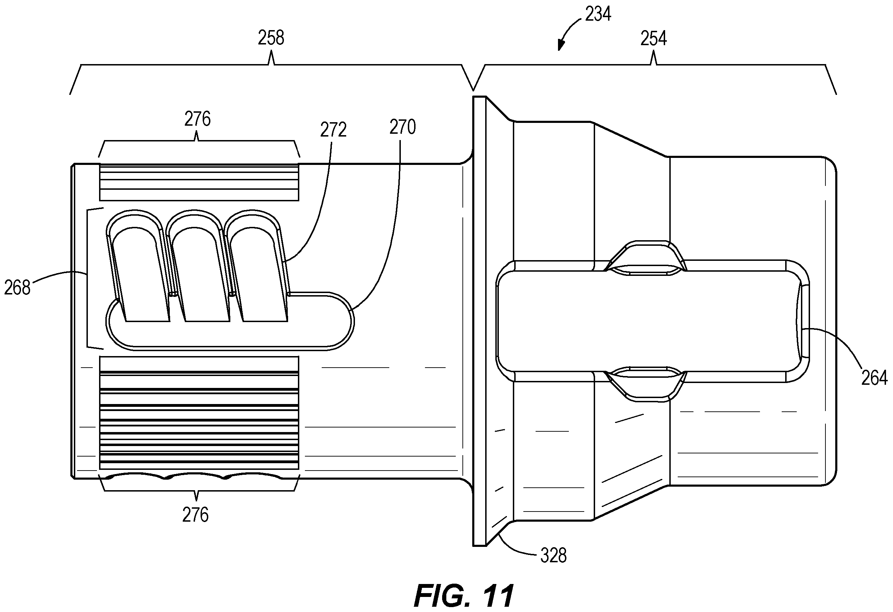

At this point, the first pins 344 reach ends 333 of their respective first slots 332. Continued rotation of the sleeve 244 in the tightening direction T causes the ends 333 of the slots 332 to bear against and rotate the first pins 344, and with them, the collar 242, positioning washer 294, locking pins 348, and locking ring 352, in the tightening direction T. As the first pins 344 rotate, the move from the axial slot 270 into the helical groove 272 (FIG. 11) corresponding with the shank size 22, 26, 30. The engagement between the helical grooves 272 and the first pins 344 causes the collar assembly 240 to retract rearwardly and thereby increase a clamping force on the jaws 238, until the tool bit 14 is secured between the jaws 238. The cantilevered arms 364 slide over the ratchet teeth 276 when rotated in the tightening direction T and prevent the collar assembly 240 from rotating in the loosening direction, until the user desires to unlock the locking assembly 241 by rotating the sleeve 244 in the loosening direction. When the sleeve 244 is rotated in the loosening direction (opposite the tightening direction T), the deeper locking pin slots 334 align with the ends of the locking pins 348, permitting the locking pins 348 to move radially outwardly under the restoring force of the cantilevered arms 364. With the cantilevered arms 364 moved out of engagement with the ratchet teeth 276, the collar assembly 240 is free to rotate in the loosening direction to reduce the clamping force on the jaws 238 and align the first pins 344 with the axial slots 270 in the body 234.

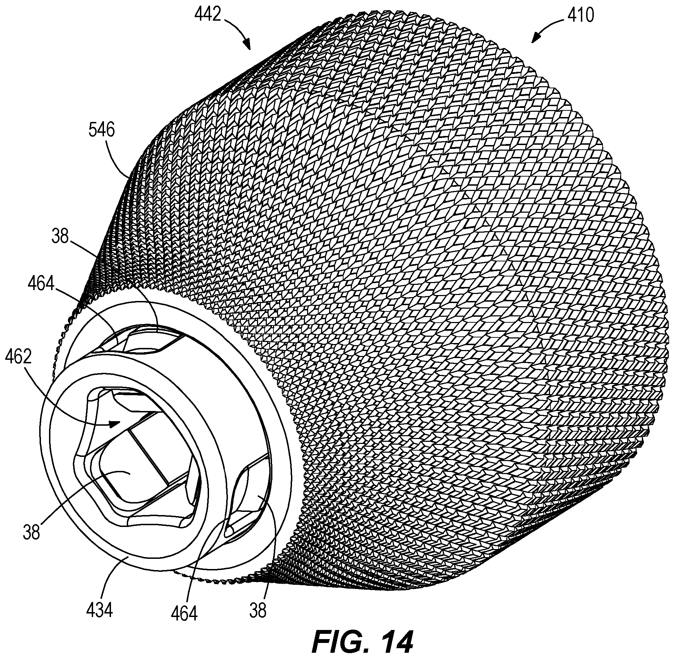

FIGS. 14-20C illustrate another embodiment of a chuck assembly 410 configured to quickly receive and secure tool bits with standard sized shanks of three different predetermined, nominal sizes (e.g., ¼-inch, 3/8-inch, and 7/16-inch). In other embodiments, the chuck assembly 410 may receive and secure tool bits with two standard sized shanks, or four or more sized shanks. The chuck assembly 410 is similar in some aspects to the chuck assembly 10, with like parts having like reference numerals plus "400." According, the following description focuses primarily on differences between the chuck assembly 410 and the chuck assembly 10. The illustrated chuck assembly 410 includes a body 434, the plurality of jaws 38, a collar 442, a plate 446, and a spring 496.

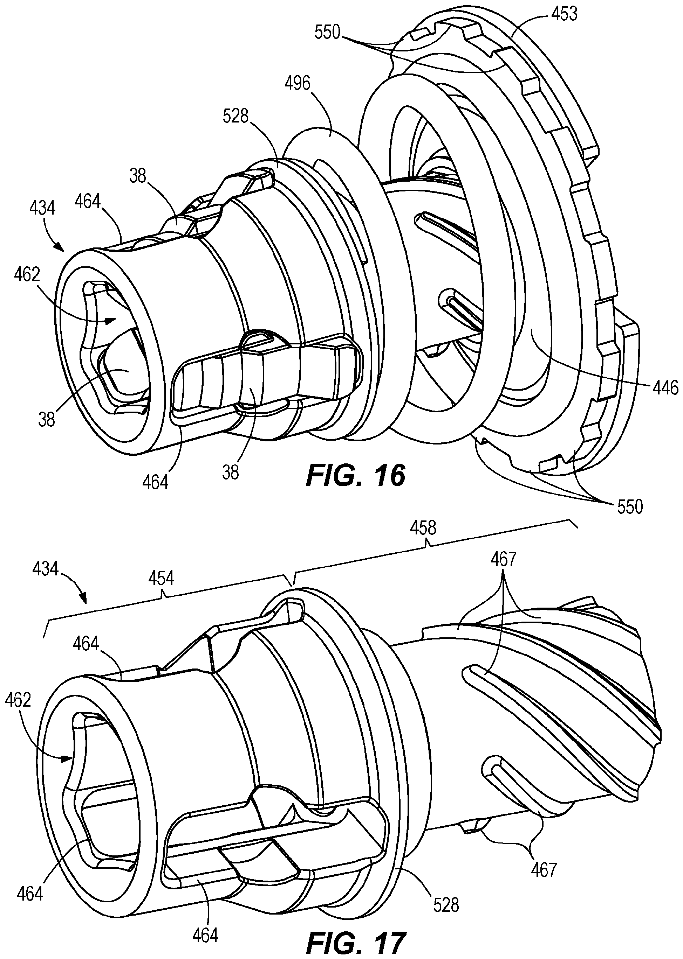

As shown in FIGS. 14-17, the body 434 includes a head portion 454, a shaft portion 458 defining a central axis A3, and a flanged portion 528 separating the head portion 454 and the shaft portion 458 (FIG. 17). The body 434 is configured to receive a portion of the tool bit 14 and is coupled for co-rotation with an output spindle of the power tool (not shown). The head portion 454 includes a tool bit aperture 462 configured to receive the tool bit 14 and a plurality of slots or openings 464 configured to receive the plurality of jaws 38. The illustrated shaft portion 458 includes a threaded bore 466 configured to receive the output spindle of the power tool; alternatively, the body 434 may be coupled to the output spindle in other ways (or integrally formed with the output spindle).

As shown in FIGS. 14-15 and 19, the collar 442 surrounds the body 434 and is rotatable about the central axis A1. The collar 442 includes a jaw engaging portion 506 on an interior side of the collar 442. The jaw engaging portion 506 is stepped and includes a plurality of flat surfaces 512 oriented parallel to the axis A1 alternating with a plurality of inclined surfaces 516 oriented obliquely relative to the axis A1. The inclined surfaces 516 are configured to engage some combination of the inclined surfaces 90 of the jaws 38. In the illustrated embodiment, an outer surface 546 of the collar 442 is textured (e.g., knurled) to facilitate a user's ability to grip and manipulate the collar 442. In other embodiments, the textured outer surface 546 may be laser etched or over molded with a separate material.

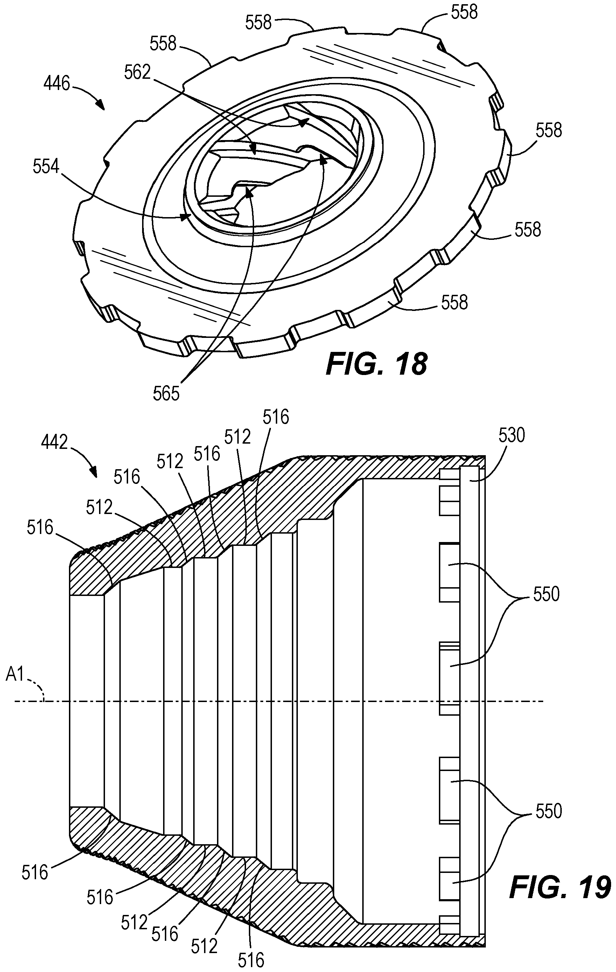

With reference to FIG. 19, the illustrated collar 442 further includes a plurality of internal recesses 550. The recesses 550 are spaced circumferentially along the inner surface of the collar 442 and are configured to receive correspondingly sized and shaped protrusions 558 on the plate 446 (FIG. 18). A retaining ring groove 530 is also formed on the inner surface of the collar 442 adjacent the recesses 550. The retaining ring groove 530 is configured to receive a retaining ring 453, which in turn retains the plate 446 within the recesses 550.

As shown in FIG. 18, the plate 446 is generally annular and has a varying thickness. In the illustrated embodiment, the thickness of the plate 446 is greatest near a central aperture 554 and is reduced at an outermost edge. The plate 446 is coupled for co-rotation with the collar 442 by the engagement of the protrusions 558 and recesses 550 and is axially fixed to the collar 442 in the forward direction by walls at the front ends of the recesses 550 and in the rearward direction by the retaining ring 453. Accordingly, the plate 446 moves axially and rotatably with the collar 442. During assembly, the protrusions 558 are aligned with the recesses 550, and the plate 446 is inserted into the collar 442 from the rear end of the collar 442. Then, the retaining ring 453 is installed into the retaining ring groove 530 to secure the plate 446 in place.

The central aperture 554 of the plate 446 receives the shaft portion 458 of the body 434 and includes internal helical threads 562 configured to receive corresponding external helical threads 467 formed on the shaft portion 454 thereby defining a threaded interface between the plate 446 and the shaft portion 454. The larger thickness of the plate 446 in the region of the central aperture 554 provides greater strength to the threaded interface. Due to the threaded interface, rotation of the plate 446 (and thus, rotation of the collar 442) relative to the body 434 causes the plate 446 and collar 442 to move axially relative to the body 434.

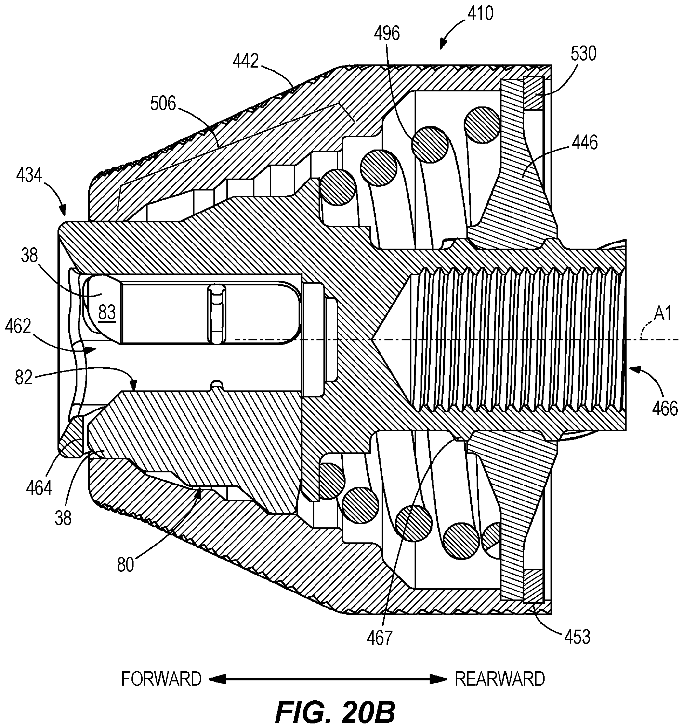

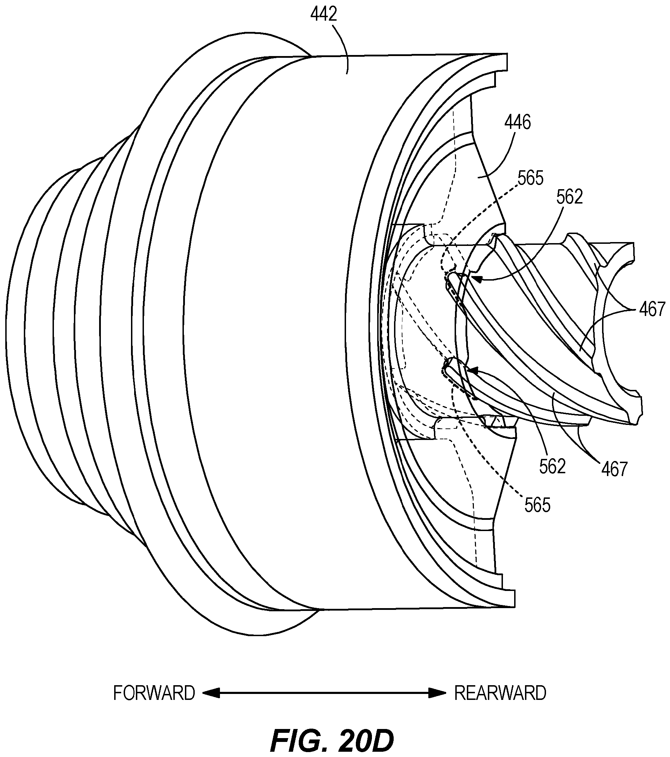

Referring to FIG. 20D, each internal helical thread 562 includes a locking recess 565 configured to receive and engage an end of a corresponding one of the external helical threads 467 of the shaft portion 454 when the collar 442 and plate 446 are rotated to the unlocked configuration. For example, in the illustrated embodiment, the locking recess 565 is a region of the internal helical thread 562, where the pitch distance is greater than the remainder of the internal helical thread 562. As described in greater detail below, the engagement between the ends of the external threads 562 and the locking recesses 565 allows the collar 442 and plate 446 to be retained in the unlocked configuration. In this way, the locking recesses 565 and ends of the external threads 562 define a locking assembly configured to selectively prevent rotation of the collar 442 and plate 446.

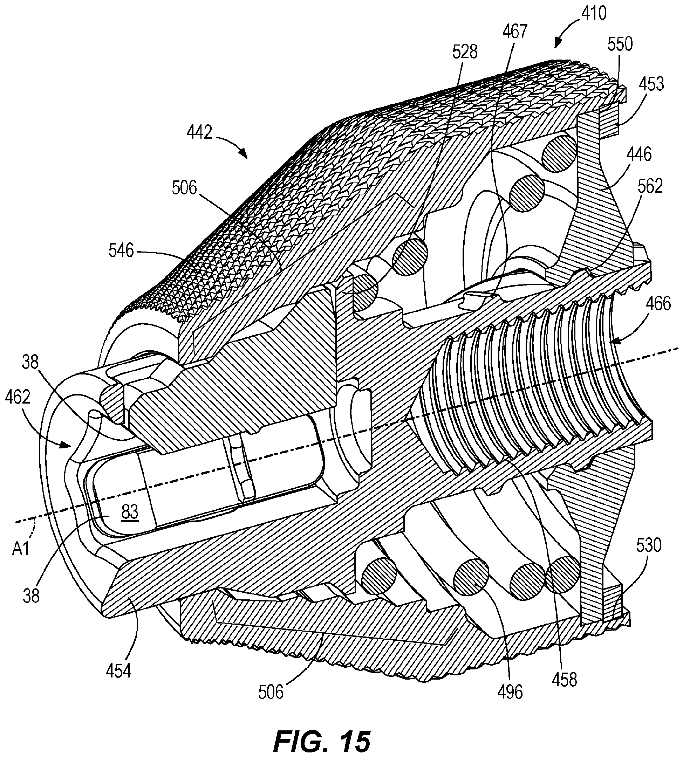

As shown in FIGS. 15-16, the illustrated spring 496 extends between the flanged portion 528 of the body 434 and the plate 446. As shown in the illustrated embodiment, the spring 496 is a conical coil spring. As such, the spring 496 tapers, increasing in diameter from a front end toward a back end of the spring 496. The conical shape of the spring 496 provides a better fit within a generally conical inner volume defined between the collar 442 and the body 434. Additionally, the conical shape of the coil spring 496 allows each successive coil of the coil spring 496 to be nested within the previous coil, which results in a reduced overall length when compressed. Additionally, the conical shape of the coil spring 496 reduces the likelihood of buckling, and spring force will increase exponentially with deflection of the coil spring 496. In other embodiments, however, other types of springs may be used as the spring 496, including but not limited to a constant diameter coil spring, a barrel coil spring, an hourglass coil spring, a wave spring, or the like. During operation, the coil spring 496 is configured to bias the plate 446 and collar 442 rearward, away from the head portion 458 of the body 434. This in turn produces a clamping force on the jaws 38 via the jaw engaging portion 506.

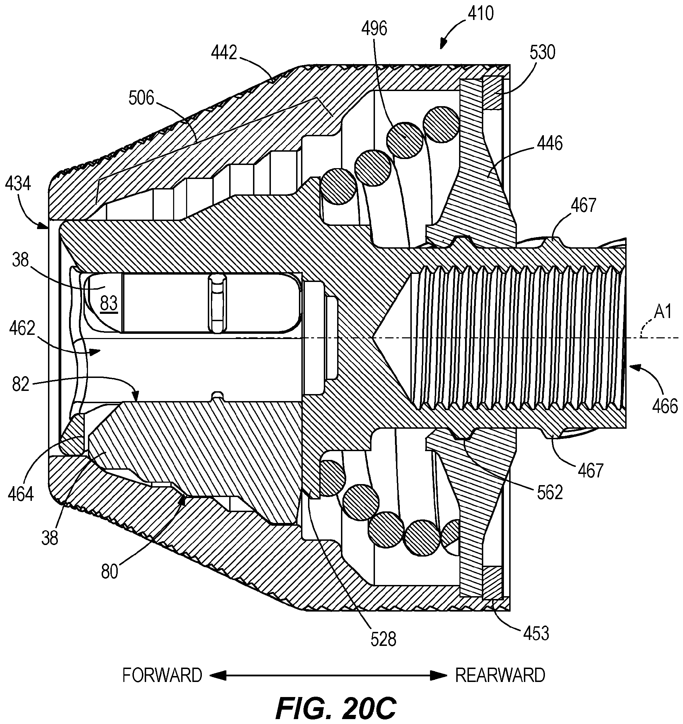

In use, the user selects a tool bit 14 to insert into the tool bit aperture 462 of the tool chuck assembly 410. The user starts by rotating the collar 442 in a loosening direction about the central axis A1. Rotation of the collar 442 rotates the plate 446, and the threads 467, 562 engage to cause the plate 446 and the collar 442 to move in a forward direction (e.g., toward and/or beyond the position shown in FIG. 20C). This compresses the spring 496 between the plate 446 and the flanged portion 528 of the body 434. The mechanical advantage provided by the threads 467, 562 allows the user to overcome the biasing force of the spring more easily 496.

As the collar 442 is rotated and moved forward, clearance is formed between the jaw engaging portion 506 and the outer sides 80 of the jaws 38. Once the collar 442 is moved to the forwardmost position, the ends of the external threads 467 enter the locking recesses 565 of threads 562, as shown in FIG. 20D. When the ends of the external threads 467 are positioned within the locking recesses 565, axial movement of the collar 442 is limited, and the collar 442 maintains the forwardmost position even if the user releases collar 442. The user can then insert the shank 18 of the tool bit 14 into the tool bit aperture 462 of the body 434. As the tool bit 14 is inserted, the rear end of the shank 18 engages the angled surfaces 83 of the jaws 38 to displace the jaws 38 outwardly enough to accommodate the outer dimension of the shank 18. The shank 18 may then be fully inserted into the chuck assembly 410.

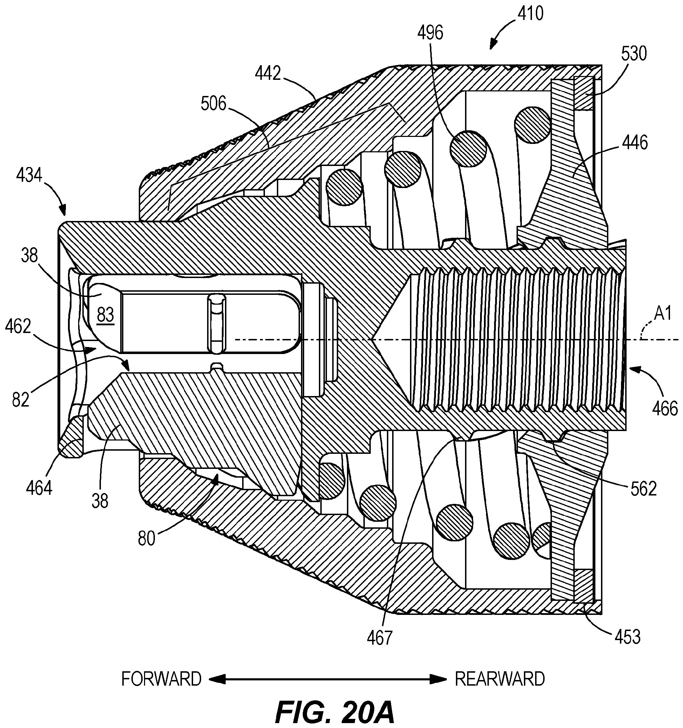

Once inserted, the user rotates the collar 442 to move the ends of the external threads 467 out of the locking recesses 565 and releases the collar 442. The spring 496 exerts a rearward force on the plate 446, causing the plate 446 and collar 442 to rotate in a tightening direction opposite the loosening direction and to move rearwardly due to the engagement of the threads 467, 562. The collar 442 continues to rotate and move rearwardly into one of the three positions depicted by FIGS. 20A-C, which each correspond respectively to the first, second, and third nominal sizes 22, 26, 30 of the shank 18 of the tool bit 14. As the collar 442 moves rearward, the engaging inclined surfaces 516 of the collar 442 engage the inclined surfaces 90 of the jaws 38 to move the jaws 38 radially inward into the tool bit aperture 462 to a position corresponding with one of the first, second, or third nominal sizes 22, 26, 30. The jaws 38 will continue to move radially inwardly until the tool engaging side 82 contacts the tool bit 14, and the spring 496 provides a clamping force on the tool bit 14 to promote alignment and limit runout (i.e., wobbling) of the tool bit 14 during operation.

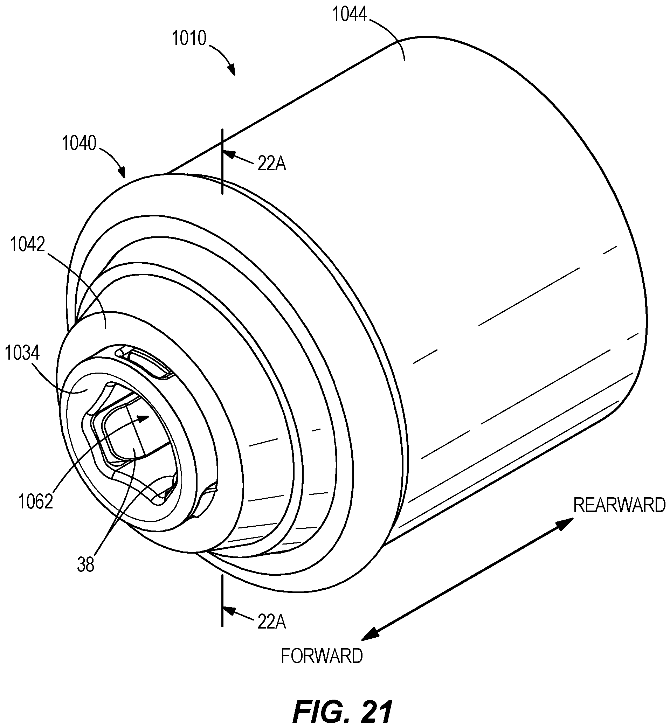

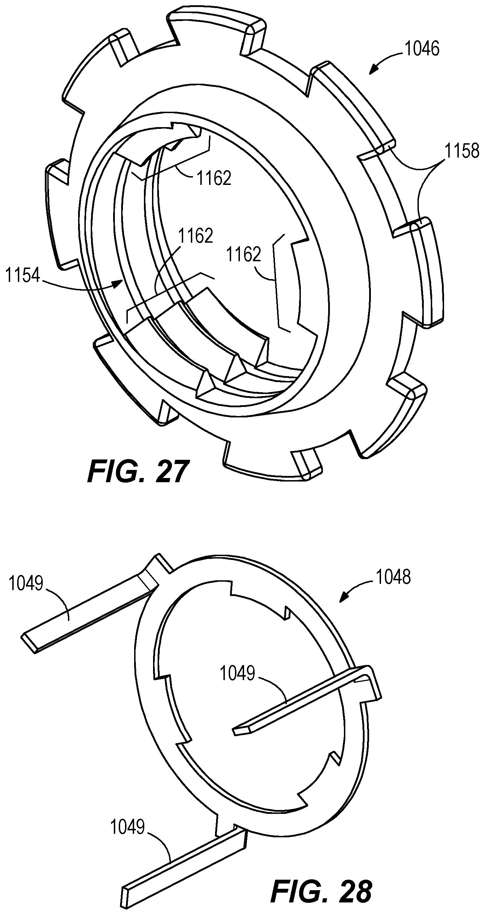

FIGS. 21-29C illustrate another embodiment of a chuck assembly 1010 configured to quickly receive and secure tool bits with standard sized shanks of three different predetermined, nominal sizes (e.g., ¼-inch, 3/8-inch, and 7/16-inch). In other embodiments, the chuck assembly 1010 may receive and secure tool bits with two standard sized shanks, or four or more sized shanks. The chuck assembly 1010 is similar in some aspects to the chuck assemblies 10, 210, 410, with like parts having like reference numerals plus "1000." Accordingly, the following description focuses primarily on differences between the chuck assembly 1010 and the chuck assemblies 10, 210, 410. The illustrated chuck assembly 1010 includes a body 1034, the plurality of jaws 38, a collar assembly 1040, a plate 1046, a rotation limiter 1048 (FIG. 28), a spring 1096, and a locking assembly 1041.

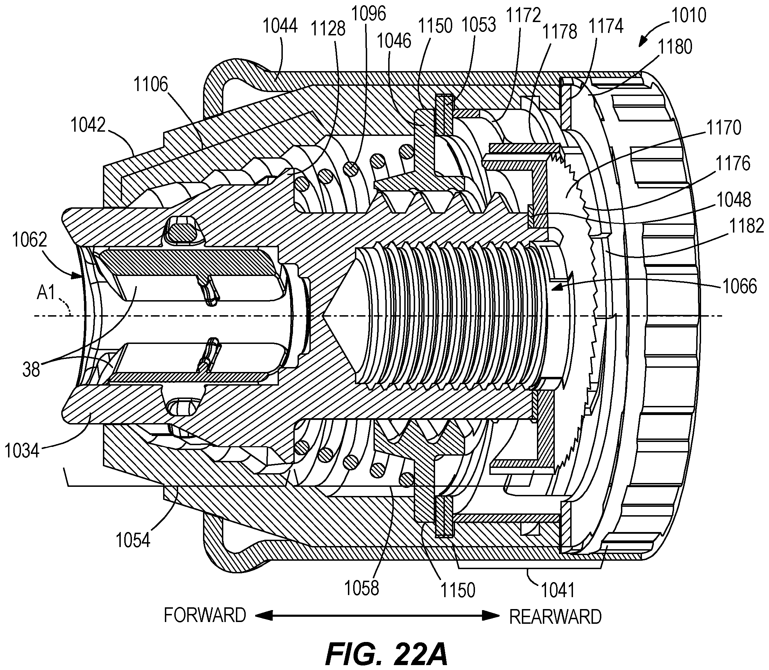

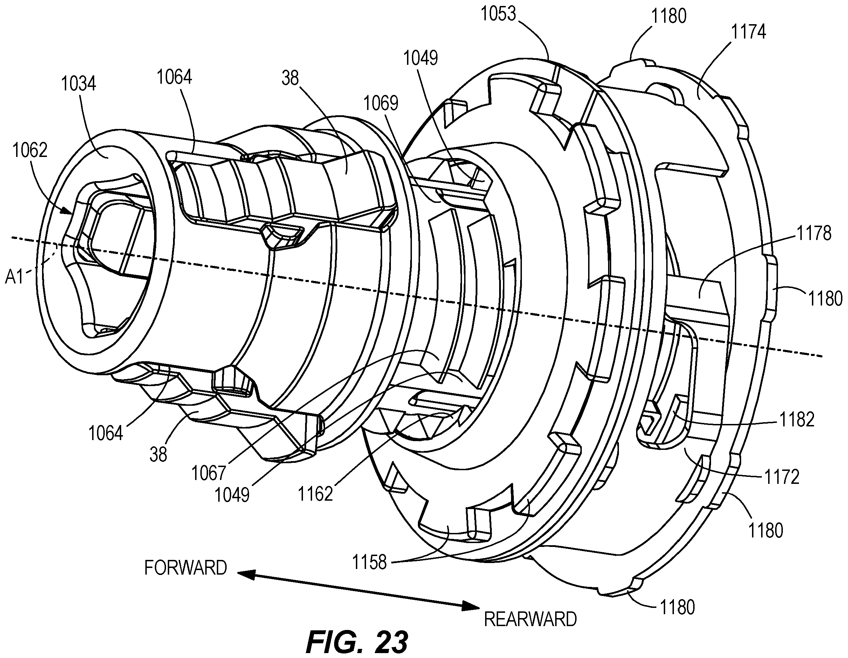

Best illustrated in FIGS. 22A and 23, the body 1034 of the chuck assembly 1010 is rotatable about a central axis A1 and includes a head portion 1054, a shaft portion 1058, and a flanged portion 1128 defining an interface between the head and shaft portions 1054, 1058. The head portion 1054 includes a tool bit aperture 1062 configured to receive a tool bit (e.g., the tool bit 14) and a plurality of openings 1064 for each of the jaws 38.

The shaft portion 1058 includes a bore 1066, a plurality of externally threaded portions 1067, a plurality of gaps 1069 formed between each externally threaded portion 1067, and a plurality of alignment recesses 1071. The bore 1066 is configured to receive the output member (e.g., spindle) of the power tool. In the illustrated embodiment, the bore 1066 includes female threads, while the output member of the power tool includes male threads. In other embodiments, the bore 1066 may be coupled to the output member via a press fit, brazing, by inserting a pin through both the body 1034 and the output member, a key and keyway arrangement, or any other suitable method.

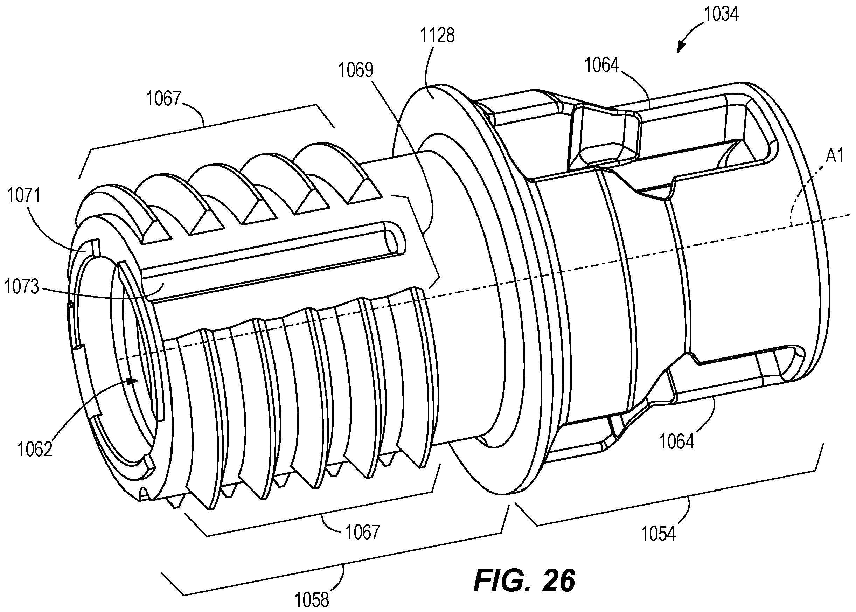

Referring to FIG. 26, the externally threaded portions 1067 are circumferentially spaced apart from one another on the shaft portion 1058 and are selectively threadably engageable with the plate 1046, as described in greater detail below. In the illustrated embodiment, each of the threaded portions 1067 includes helical thread segments with a V-thread profile, but in other embodiments, the threaded portions 1067 may have another thread profile, and preferably a standard thread profile such as a unified thread, acme thread, metric thread, buttress thread, or the like. Gaps 1069 are defined between adjacent externally threaded portions 1067. The gaps 1069 are unthreaded regions of the shaft portion 1058. In the illustrated embodiment, the externally threaded portions 1067 are defined by a continuous helix with a constant pitch, and the gaps 1069 are formed, for example, by machining away portions of the external threads. As such, adjacent threads within each of the externally threaded portions 1067 are spaced apart in a direction parallel to the axis A1 by a constant pitch.

In the illustrated embodiment, the chuck body 1034 further includes channels 1073, each channel 1073 extending centrally along a respective one of the gaps 1069 in a direction parallel to the axis A1. Each illustrated channel 1073 extends through a rear end of the shaft portion 1058 and in a direction towards the flanged portion 1128, terminating at a point corresponding with the ends of the externally threaded portions 1067. With continued reference to FIG. 26, arcuate ribs 1071 are formed on the rear end of the shaft portion 1058. The arcuate ribs 1071 are circumferentially spaced from one another, and serve to engage and position the rotation limiter 1048, as described in greater detail below.

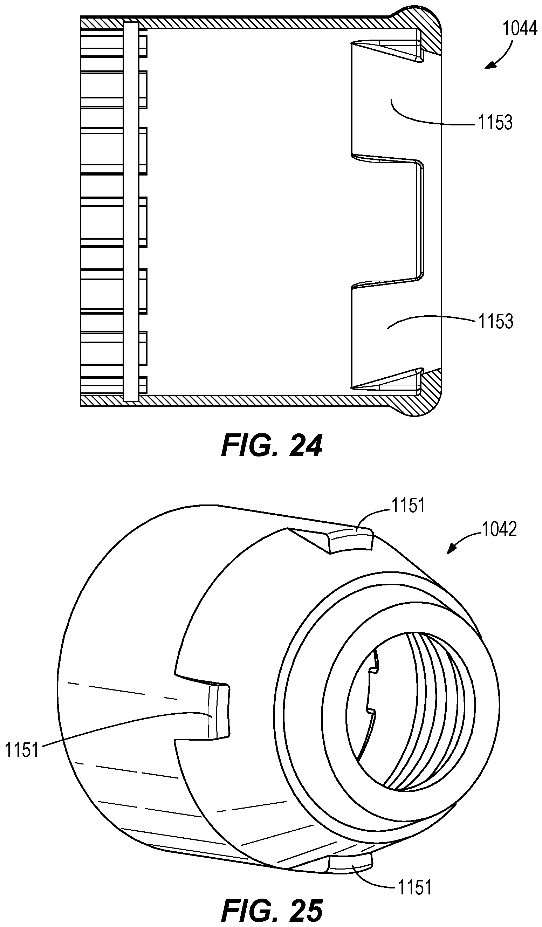

FIGS. 21, 22A, 24, and 25 illustrate the collar assembly 1040. The collar assembly 1040 includes a collar 1042 (FIG. 25) and a rotatable sleeve 1044 (FIG. 24). The collar 1042 surrounds the body 1034 and includes a stepped jaw-engaging portion 1106 on an interior side, and a plurality of external rotation features 1151 (e.g., projections) formed on the external surface. The rotatable sleeve 1044 surrounds at least a portion of the collar 1042 and includes a plurality of internal rotation features 1153 (e.g., projections) formed on an inner surface. The external rotation features 1151 are circumferentially spaced apart by a distance greater than the width of each of the internal rotation features 1153 of the sleeve 1044. As such, the sleeve 1044 and the collar 1042 define a lost-motion connection, in which the sleeve 1044 is rotatable relative to the collar 1042 to a limited extent and then coupled for co-rotation with the collar 1042 once the internal and external rotations features 1153, 1151 come into engagement. The limited relative rotation between the sleeve 1044 and the collar 1042 allows for the sleeve 1044 to act as an actuator for unlocking the locking assembly 1041. For example, as described in greater detail below, a user removing a tool bit 14 from the chuck assembly 1010 may grasp and rotate the sleeve 1044 in an unlocking direction. Initially, the sleeve 1044 rotates relative to the collar 1042 and the collar 1042 remains stationary. During this period, the rotation of the sleeve 1044 unlocks the locking assembly 1041. Once the locking assembly 1041 is unlocked, the internal rotation features 1153 of the sleeve 1044 come into engagement with the external rotation features 1151 of the collar 1042, and the sleeve 1044 and collar 1042 then rotate together to release a clamping force on the tool bit 14.

Now referring to FIGS. 22A and 27, the plate 1046 coupled to the collar 1042. The plate 1046 includes a central aperture 1154 and a plurality of outwardly-extending protrusions 1158. The protrusions 1158 are received within corresponding recesses 1150 of the collar 1042 to couple the plate 1046 and collar 1042 for co-rotation. The central aperture 1154 receives the shaft portion 1058 of the chuck body 1034, and the plate 1046 includes a plurality of internally threaded portions 1162 extending into the central aperture 1154. Each of the internally threaded portions 1162 includes helical thread segments configured to match and mesh with those of the externally threaded portions 1067. As such, in the illustrated embodiment, the internally threaded portions 1162 are V-threads and have a constant pitch, but in other embodiments, the internally threaded portions 1162 may be another type of thread corresponding to the thread type of the externally threaded portions 1067.

When the internal threaded portions 1162 are engaged with the externally threaded portions 1067, rotation of the collar 1042 and plate 1046 relative to the chuck body 1034 causes axial movement of the collar 1042 and plate 1046 along the chuck body 1034 via the action of the threads. The internal threaded portions 1162 are also able to be received within the gaps 1069 between the externally threaded portions 1067. When received within the gaps 1069, the collar 1042 and plate 1046 are able to slide axially relative to the chuck body 1034 without rotating the collar 1042 and plate 1046. Axial movement of the plate 1046 relative to the collar 1042 may be limited by a retaining ring 1053 installed in a retaining ring groove formed in the collar 1042 (FIG. 22A).

Referring to FIG. 28, the rotation limiter 1048 includes a plurality of limiting arms 1049, which extend into the gaps 1069 and abut one circumferential end of each of the external threaded portions 1067 (FIG. 23). The rotation limiter 1048 also engages the ribs 1071 formed on the rear end of the chuck body 1034, which couple the rotation limiter 1048 for co-rotation with the chuck body 1034. In use, the limiting arms 1049 prevent the internal threaded portions 1162 from rotating beyond the ends of the external threaded portions 1067 in the tightening direction and also from over-rotating into engagement with an adjacent set of external threaded portions 1067 when the internal threaded portions 1162 are rotating into the gaps 1069 in the loosening direction. In some embodiments, the rotation limiter 1048 is formed by a metal stamping process and then bent into shape, but in other embodiments, the rotation limiter 1048 may be machined or cast.

FIG. 22A illustrates the spring 1096 of the chuck assembly 1010, which extends between the flanged portion 1128 of the body 1034 and the plate 1046. As shown in the illustrated embodiment, the spring 1096 is a conical coil spring. During operation, the coil spring 1096 is configured to bias the plate 1046 and collar 442 rearward, away from the head portion 1058 of the body 1034. This, in turn, produces a clamping force on the jaws 38 via the jaw engaging portion 1106.

FIGS. 22A-23 illustrate the locking assembly 1041, which is moveable between a locked state and an unlocked state. In the locked state, the locking assembly 1041 is configured to prevent rotation of the collar assembly 1040 with respect to the body 1034 in the loosening direction. In the unlocked state, the collar assembly 1040 is rotatable with respect to the body 1034 in the loosening direction. In one exemplary use case, the locking assembly 1241 prevents the rotational inertia of the chuck assembly 1010 from unintentionally rotating the collar assembly 1040 with respect to the body 1034 when the output member of the tool is brought to a sudden stop (e.g., due to motor braking when the trigger of the tool is released). The illustrated locking assembly 1041 includes a ratchet plate 1170 keyed to the chuck body 1034 (FIGS. 22A-B), a pawl ring 1172 surrounding the ratchet plate 1170, and an unlocking plate 1174.

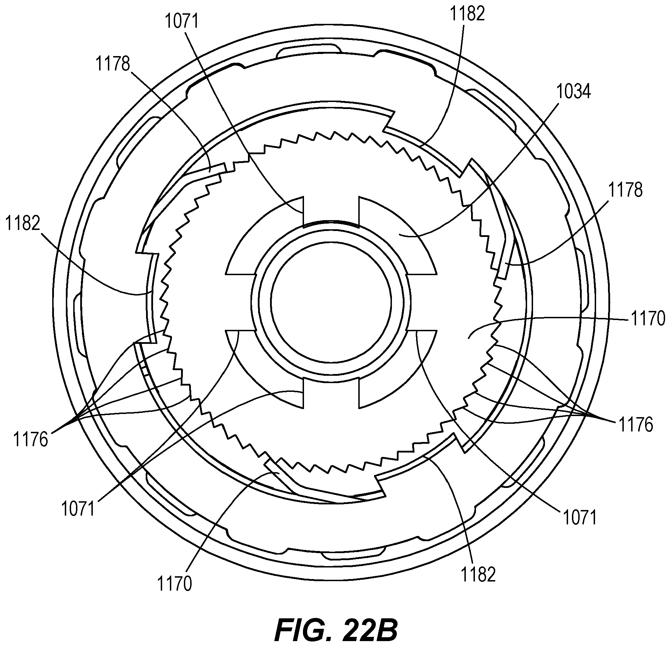

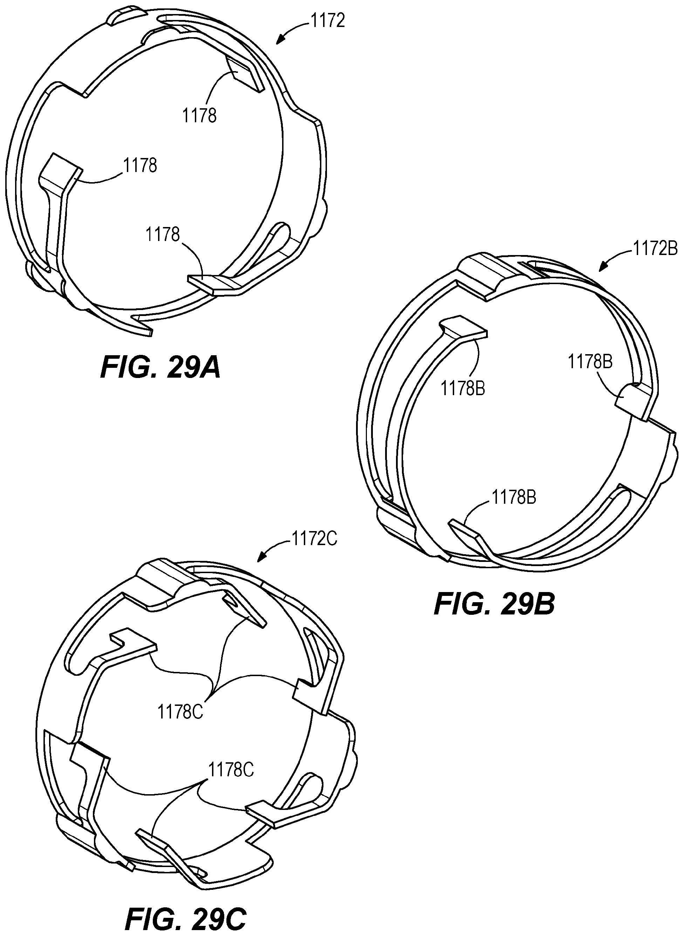

With continued reference to FIGS. 22A-22B, the ratchet plate 1170 includes a plurality of ratchet teeth 1176 formed on the outer surface of the ratchet plate 1170. FIGS. 22A, 22B, 23, and 29A illustrate the pawl ring 1172, which is positioned within the collar 1042 and between the retaining ring 1053 and the unlocking plate 1174. As best shown in FIGS. 22B and 29A, the pawl ring 1172 includes a plurality of pawl arms 1178 configured to engage the plurality of ratchet teeth 1176 of the ratchet plate 1170. In the illustrated embodiment, the plurality of pawl arms 1178 includes three pawl arms 1178 that are angular in shape. In other embodiments, such as the embodiment shown in FIG. 29B, a pawl ring 1172B may include arcuately shaped pawl arms 1178B. In further embodiments, such as the embodiment shown in FIG. 29C, a pawl ring 1172C may include more than three pawl arms 1178C (e.g., 6 pawl arms), and the length of the pawl arms 1178C may vary.

FIGS. 22A and 22B illustrate the unlocking plate 1174, which is positioned rearward of the pawl ring 1172. The unlocking plate 1174 includes a plurality of alignment features 1180 and a plurality of lifter arms 1182. The alignment features 1180 are formed on the outer circumferential surface and are configured to couple the unlocking plate 1174 to the rotatable sleeve 1044 for co-rotation. The lifter arms 1182 extend axially forward towards the pawl ring 1172 and are configured to selectively contact the pawl arms 1178. Specifically, the lifter arms 1182 are configured to lift the pawl arms 1178 away from the ratchet teeth 1176 of the ratchet plate 1170 (the unlocked state) to allow for rotation of the collar assembly 1040 in a loosening direction. Once the lifter arms 1182 no longer contact the pawl arms 1178, the pawl arms 1178 are biased radially inward and into contact with the plurality of ratchet teeth 1176. When the pawl arms 1178 contact the ratchet teeth 1176, the collar assembly 1040 is no longer permitted to rotate in the loosening direction (i.e., the locked state).

In use, the user selects a tool bit 14 to insert into the tool bit aperture 1062 of the tool chuck assembly 1010. The user starts by rotating the rotatable sleeve 1044 of the collar assembly 1040 about the central axis A1 in a loosening direction. Simultaneously, the unlocking plate 1174 rotates with the rotatable sleeve 1044, and the lifter arms 1182 engage the pawl arms 1178. As a result, the pawl arms 1178 are moved radially outward and away from the ratchet teeth 1176 of the ratchet plate 1170. The locking assembly 1041 is now in the unlocked state, and rotation of the collar assembly 1040 in the loosening direction is permitted.

Next, the rotatable sleeve 1044 is further rotated until the internal rotation features 1153 engage the external rotation features 1151 of the collar 1042. When the internal and external rotation features 1153, 1151 are in contact, both the rotatable sleeve 1044 and the collar 1042 are rotatable together about the central axis A1. Additionally, rotation of the collar 1042 in the loosening direction results in simultaneous rotation of the plate 1046 also in the loosening direction. The rotatable sleeve 1044 and the collar 1042 are rotated until the internally threaded portions 1162 of the plate 1046 disengage from the externally threaded portions 1067 and move into the gaps 1069, to an extent limited by contact with the limiting arms 1049 of the rotation limiter 1048 (FIG. 23). When the internally threaded portions 1162 contact the limiting arms 1049, the internally threaded portions 1162 of the plate 1046 are aligned with the gaps 1069.

When the internally threaded portions 1162 of the plate 1046 are aligned with the gaps 1069, the plate 1046 and the collar assembly 1040 are moveable forward along the central axis A1 relative to the chuck body 1034 against the biasing force of the spring 1096 (FIG. 22A). As the collar assembly 1040 is moved forward, clearance is formed between the jaw engaging portion 1106 and the outer side 80 of each of the jaws 38. The user can then insert the shank 18 of the tool bit 14 into the tool bit aperture 1062 of the body 1034. As the tool bit 14 is inserted, the rear end of the shank 18 engages the jaws 38 to displace the jaws 38 outwardly enough to accommodate the outer dimension of the shank 18. The shank 18 may then be fully inserted into the chuck assembly 1010.

Once inserted, the user may release the collar assembly 1040, which moves rearward under the influence of the spring 1096. The collar assembly 1040 is able to move rearward without rotating, as the internal threaded portions 1162 of the plate 1046 remain aligned with the gaps 1069. As the collar assembly 1040 moves rearward, the jaw engaging portion 1106 bears against the jaws 38 to move the jaws 38 radially inward within the tool bit aperture 1062 to a position corresponding with one of the first, second, or third nominal sizes 22, 26, 30. The jaws 38 will continue to move radially inward until the tool engaging side 82 contacts the tool bit 14. Additionally, a projecting rib 86 engages the groove 20 in the tool bit 14, which limits axial movement of the tool bit 14 in the chuck assembly 1010.

Next, the collar assembly 1040 is rotated by the user in a tightening direction about the central axis A1 (e.g., by grasping and rotating the sleeve 1044 in the tightening direction). The pawl arms 1187 are configured to ride over the ratchet teeth 1176 in the tightening direction but engage the ratchet teeth 1176 to prevent loosening. Rotation of the collar 1042 (and with it, the plate 1046) threads the internally threaded portions 1162 onto the externally threaded portions 1067, and the plate 1046 and the collar assembly 1040 move axially rearward as guided by the engagement of the threaded portions 1067, 1162. The additional rearward axial movement causes the jaw engaging portion 1106 of the collar 1042 to further press against the jaws 38 to retain the tool bit 14 and increase the clamping force on the tool bit 14. Now, the tool bit 14 is inserted and held in the tool bit aperture 1062 by the jaws 38, and rotation in the loosening direction is limited as the locking assembly 1041 is in the locked state.

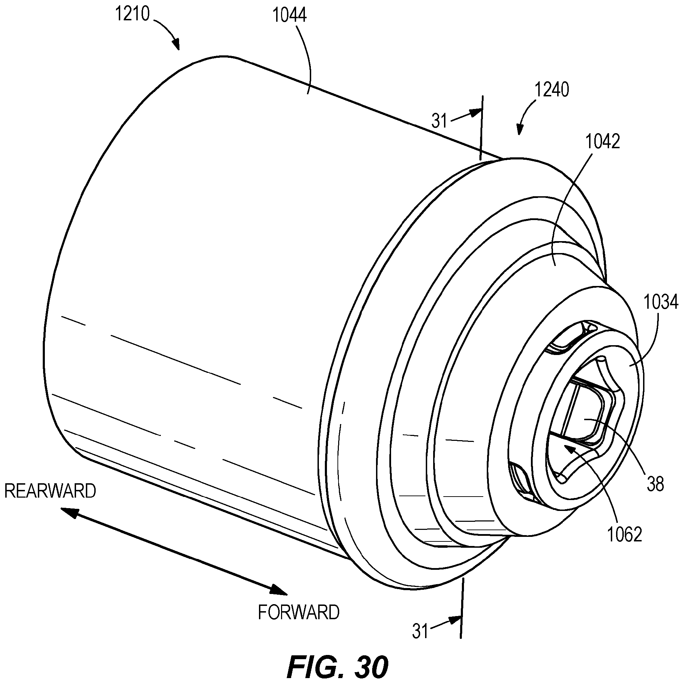

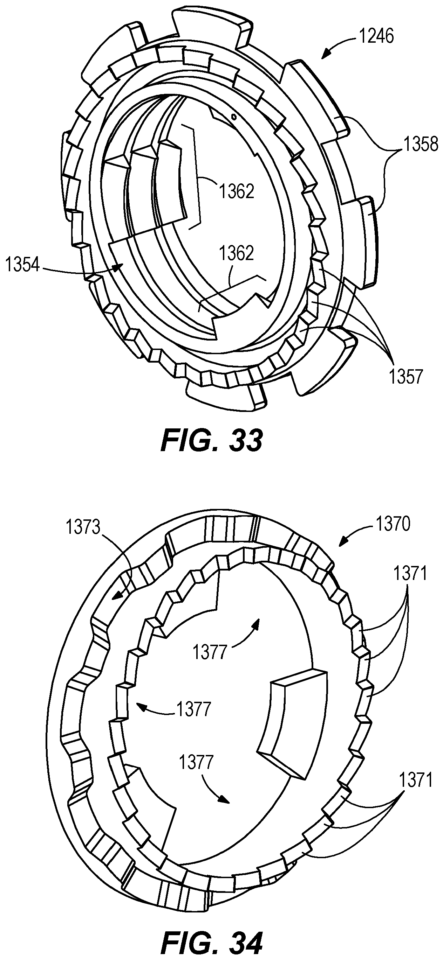

FIGS. 30-34 illustrate another embodiment of a chuck assembly 1210 configured to quickly receive and secure tool bits with standard-sized shanks of three different predetermined, nominal sizes (e.g., ¼-inch, 3/8-inch, and 7/16-inch). In other embodiments, the chuck assembly 1210 may receive and secure tool bits with two standard sized shanks, or four or more sized shanks. The chuck assembly 1210 is similar in some aspects to the chuck assembly 1010, with like parts having like reference numerals plus "1200." Accordingly, the following description focuses primarily on differences between the chuck assembly 1210 and the chuck assemblies 1010. The illustrated chuck assembly 1210 includes the body 1034, the plurality of jaws 38, a collar assembly 1240, a plate 1246, the rotation limiter 1048, the spring 1096, and a locking assembly 1241.

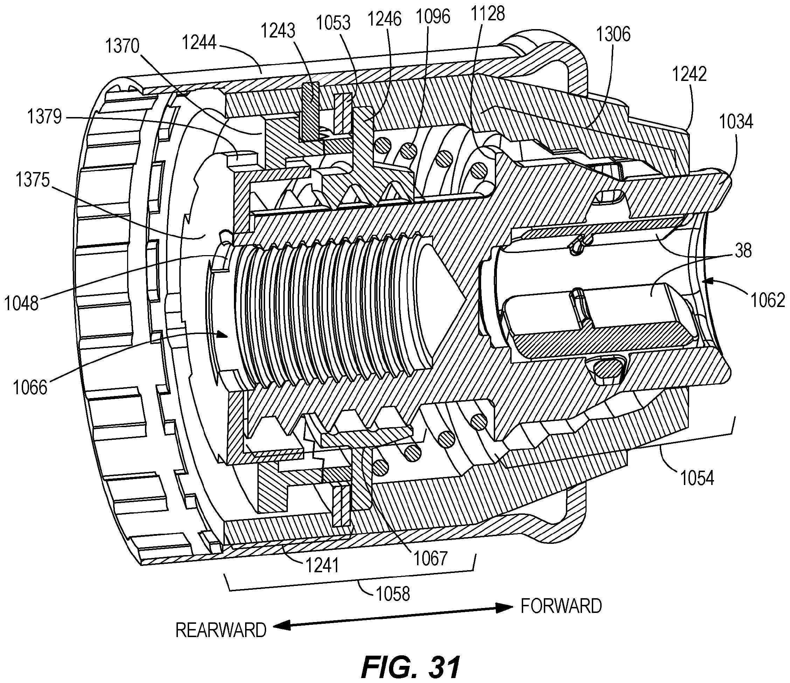

FIGS. 30 and 31 illustrate the collar assembly 1240. The collar assembly 1240 includes a collar 1242 and a rotatable sleeve 1244. The collar 1242 surrounds the body 1034 and includes a jaw-engaging portion 1306 on the interior side and at least one pin slots (not shown) formed on the external surface of the collar 1242. The rotatable sleeve 1244 surrounds at least a portion of the collar 1042 and supports a pin 1243, which extends through a circumferential slot in the collar 1242 into the interior of the collar 1242. The pin 1243 is rotatable together with the sleeve 1244 to unlock the locking assembly 1241, as described in greater detail below.

FIGS. 31-33 illustrate the plate 1246 that is positioned within the collar 1242 and surrounds the shaft portion 1058 of the body 1034. The plate 1246 includes a central aperture 1354, a plurality of first ratchet teeth 1357, and a plurality of protrusions 1358. The central aperture 1354 is configured to receive the shaft portion 1058 of the body 1034 and includes a plurality of internally threaded portions 1362. The plurality of internally threaded portions 1362 are configured to engage the plurality of externally threaded portions 1067 or be received within the gaps 1069 between the externally threaded portions 1067. The first ratchet teeth 1357 are formed on a rear-facing surface of the plate 1246 and extend parallelly to the central axis A1. In the illustrated embodiment, the first ratchet teeth 1357 are sloped in a first direction. The plurality of protrusions 1358 are formed on the outer circumferential surface of the plate 1246 and are received in a plurality of recesses 1150 formed in the inner circumferential surface of the collar 1242. When the plurality of protrusions 1358 is received in the plurality of recesses 1150, the plate 1246 and the collar 1242 are coupled and moveable together both axially and rotationally. Additionally, the position of the plate 1046 relative to collar 1242 is further limited by a retaining ring 1053 installed in a retaining ring groove formed in collar 1242.

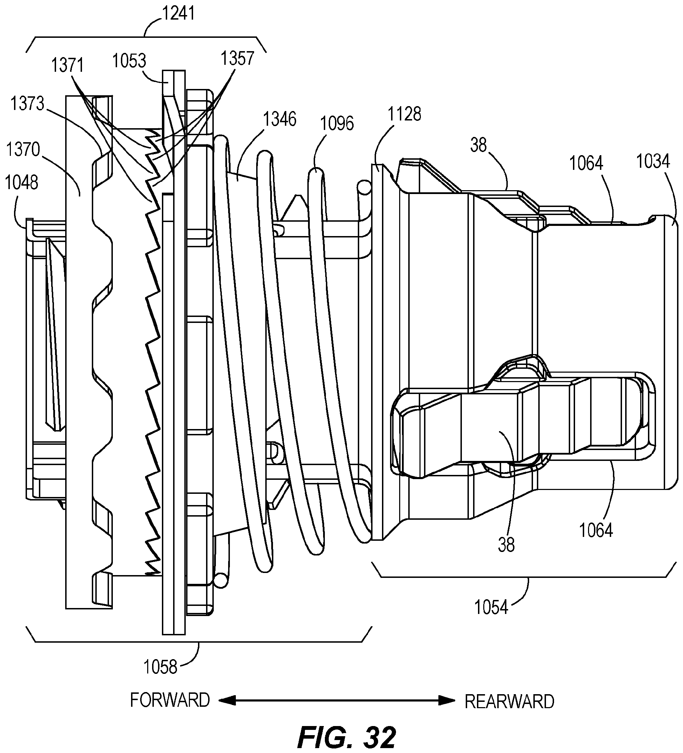

FIGS. 31 and 32 illustrate the locking assembly 1241 that is positioned within the collar 1242 and rearward of the plate 1246. The locking assembly 1241 is moveable between a locked state and an unlocked state. In the locked state, the locking assembly 1241 is configured to prevent rotation of the collar assembly 1240 with respect to the body 1034 in a loosening direction while allowing rotation in the tightening direction. In the unlocked state, the collar assembly 1240 is freely rotatable with respect to the body 1034 in both the loosening and tightening directions. In one exemplary use case, the locking assembly 1241 prevents the rotational inertia of the chuck assembly 1210 from unintentionally rotating the collar assembly 1040 in the loosening direction with respect to the body 1034 (e.g., when the output member of the tool is brought to a sudden stop). The locking assembly 1241 includes the first plurality of ratchet teeth 1357 of the plate 1246, the ratchet plate 1370, and a guide plate 1375.

As shown in FIGS. 31, 32, and 34, the ratchet plate 1370 is positioned within the collar 1242 and rearward of the plate 1246. The ratchet plate 1370 is further biased into contact with the plate 1246 by a locking spring (not shown). The ratchet plate 1370 includes a plurality of second ratchet teeth 1371, a locking cam profile 1373, and a plurality of guide slots 1377. The second ratchet teeth 1371 are formed on a forward-facing surface of the ratchet plate 1370 and are configured to selectively engage the plurality of first ratchet teeth 1357 of the plate 1346. In the illustrated embodiment, the second ratchet teeth 1371 are sloped in a second direction opposite the first direction. The locking cam profile 1373 is also formed on a forward-facing surface of the ratchet plate 1370 and is configured to be engaged by the pin 1243 installed on the collar assembly 1040. In other embodiments, the locking cam profile 1373 may be formed on a circumferential surface of the ratchet plate 1370. The plurality of guide slots 1377 are formed in a centrally located aperture of the ratchet plate 1370 and are configured to receive a portion of the guide plate 1375.

As shown in FIG. 31, the guide plate 1375 is positioned within the collar 1242 and is coupled to the plurality of alignment recesses 1071 formed on the rear face of the body 1034. The guide plate 1375 includes a plurality of axial guides 1379 formed on the outer circumferential surface. As shown in FIG. 31, the axial guides 1379 are received within the plurality of guide slots 1377 of the ratchet plate 1370. The axial guides 1379 are configured to limit rotation of the ratchet plate 1370 with respect to the body 1034 but allow for axial movement of the ratchet plate 1370 along the central axis A1.

In use, the user selects a tool bit 14 to insert into the tool bit aperture 1062 of the tool chuck assembly 1210. The user starts by rotating the rotatable sleeve 1244 of the collar assembly 1240 about the central axis A1 in a loosening direction. Simultaneously, the pin 1243 rotates with the rotatable sleeve 1044, until pin 1243 contacts one end of the pin slot formed in the collar 1242. As the pin 1243 moves within the pin slot, the pin 1243 also engages the locking cam profile 1373 of the ratchet plate 1370. Movement of the pin 1243 in the locking cam profile 1373 in the loosening direction cause the ratchet plate 1370 to move axially rearward along the axial guides 1379 and away from the plate 1246. The rearward axial movement of the ratchet plate 1370 disengages the second ratchet teeth 1371 with the first ratchet teeth 1357. Now the locking assembly 1241 is in the unlocked state, and the collar assembly 1240 is rotatable relative to the body 1034 in the loosening direction.

Now, the rotatable sleeve 1244 and the collar 1242 are rotated together in the loosening direction, which results in simultaneous rotation of the plate 1246 in the loosening direction. The rotatable sleeve 1244 and the collar 1242 are rotated until the internally threaded portions 1362 of the plate 1246 contact the limiting arms 1049 of the rotation limiter 1048. When the internally threaded portions 1362 contact the limiting arms 1049, the internally threaded portions 1362 of the plate 1246 are aligned with the gaps 1069.

When the internally threaded portions 1362 of the plate 1246 are aligned with the gaps 1069, the plate 1246 and the collar assembly 1240 are moveable forward along the central axis A1 against the biasing force of the spring 1096. As the collar assembly 1240 is moved forward, clearance is formed between the jaw engaging portion 1306 and the outer side 80 of each of the jaws 38. The user can then insert the shank 18 of the tool bit 14 into the tool bit aperture 1062 of the body 1034. As the tool bit 14 is inserted, the rear end of the shank 18 engages the jaws 38 to displace the jaws 38 outwardly enough to accommodate the outer dimension of the shank 18. The shank 18 may then be fully inserted into the chuck assembly 1210.

Once inserted, the user may release the collar assembly 1240, which moves rearward under the influence of the spring 1096. As the collar assembly 1240 moves rearward, the jaw engaging portion 1306 bears against the jaws 38 to move the jaws 38 radially inward within the tool bit aperture 1062 to a position corresponding with one of the first, second, or third nominal sizes 22, 26, 30. The jaws 38 will continue to move radially inward until the tool engaging side 82 contacts the tool bit 14. Additionally, a projecting rib 86 engages the groove 20 in the tool bit 14, which limits the axial movement of the tool bit 14 in the chuck assembly 1210.

Next, the collar assembly 1240 is rotated in a tightening direction about the central axis A1. Rotation of the collar assembly 1240 starts with rotating only the rotatable sleeve 1244 and the pin 1243 in the tightening direction until the pin 1243 contacts the other end of the pin slot formed in the collar 1242. Once the pin 1243 contacts the other end of the pin slot, rotation of the rotatable sleeve 1244 also causes rotation of the collar 1242. Rotation of the collar 1242 is transferred to the plate 1246, which causes the internally threaded portions 1362 to slide from the gaps 1069 into the axial space between the externally threaded portions 1067. Further rotation of the plate 1246 threads the internally threaded portions 1362 onto the externally threaded portions 1067, and the plate 1246 and the collar 1242 move axially rearward as guided by the pitch of the externally threaded portions 1067. The additional rearward axial movement causes the jaw engaging portion 1106 of the collar 1242 to further press against the jaws 38 to retain the tool bit 14. Now, the tool bit 14 is inserted and held in the tool bit aperture 1062 by the jaws 38, and rotation in the loosening direction is limited as the locking assembly 1041 is in the locked state.

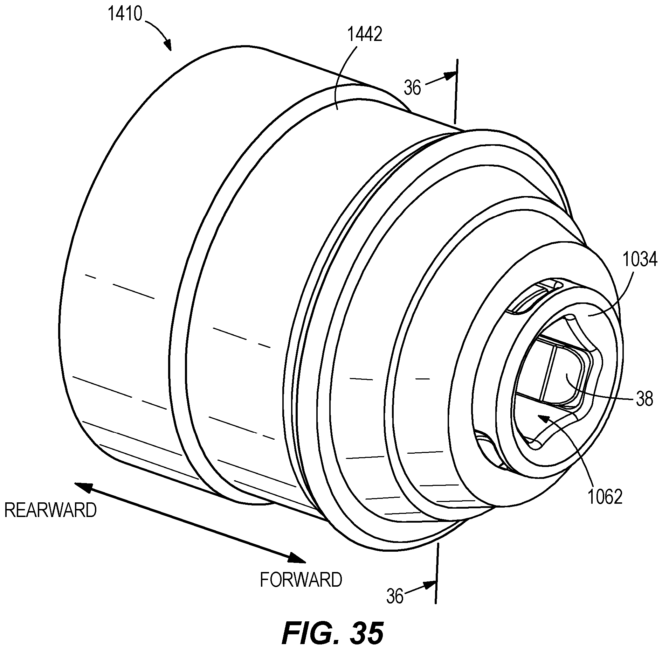

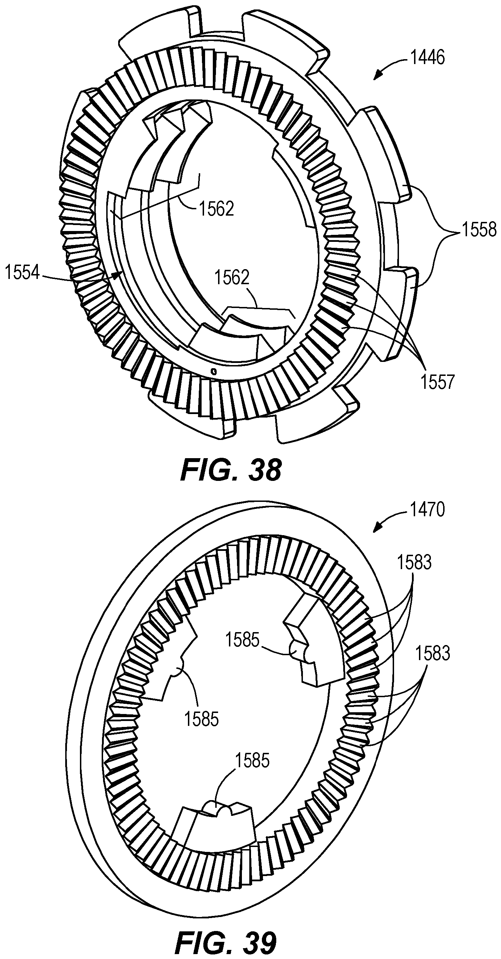

FIGS. 35-39 illustrate another embodiment of a chuck assembly 1410 configured to quickly receive and secure tool bits with standard-sized shanks of three different predetermined, nominal sizes (e.g., ¼-inch, 3/8-inch, and 7/16-inch). In other embodiments, the chuck assembly 1410 may receive and secure tool bits with two standard sized shanks, or four or more sized shanks. The chuck assembly 1410 is similar in some aspects to the chuck assembly 1010, with like parts having like reference numerals plus "1400." Accordingly, the following description focuses primarily on differences between the chuck assembly 1410 and the chuck assembly 1010. The illustrated chuck assembly 1410 includes the body 1034, the plurality of jaws 38, a collar 1442, a plate 1446, the rotation limiter 1048, the spring 1096, and a locking assembly 1441.

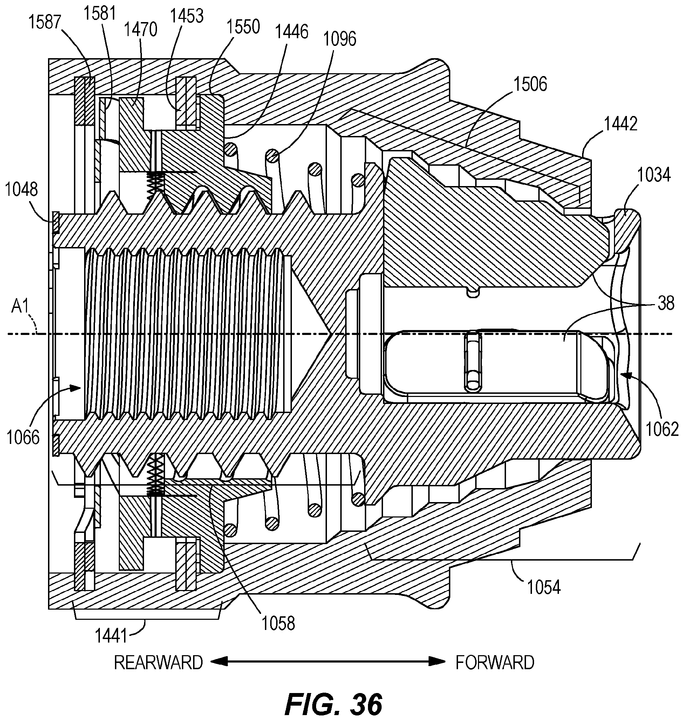

FIGS. 35 and 36 illustrate the collar 1442, which surrounds the body 1034 and includes a jaw-engaging portion 1506 on an interior side. The collar 1442 is configured to be rotated about the central axis A1 and moveable axially along the central axis A1.

FIGS. 36, 37, and 38 illustrate the plate 1446, which is positioned within the collar 1442 and surrounds the shaft portion 1058 of the body 1034. The plate 1446 includes a central aperture 1554, a plurality of plate teeth 1557, and a plurality of protrusions 1558. The central aperture 1554 is configured to receive the shaft portion 1058 of the body 1034 and includes a plurality of internally threaded portions 1562. The plurality of internally threaded portions 1562 are configured to engage the plurality of externally threaded portions 1067 of the body 1034 or be received within the gaps 1069 between the externally threaded portions 1067. The plate teeth 1557 are formed on a rear-facing surface of the plate 1246 and extend in a parallel direction to the central axis A1. The plurality of protrusions 1558 are formed on the outer circumferential surface of the plate 1446 and are received in a plurality of recesses 1550 formed in the inner circumferential surface of the collar 1442. When the plurality of protrusions 1558 is received in the plurality of recesses 1550, the plate 1446 and the collar 1442 are coupled and moveable together both axially and rotationally. Additionally, the axial movement of plate 1446 relative to collar 1442 is further limited by the retaining ring 1453 installed in a retaining ring groove formed in collar 1442.

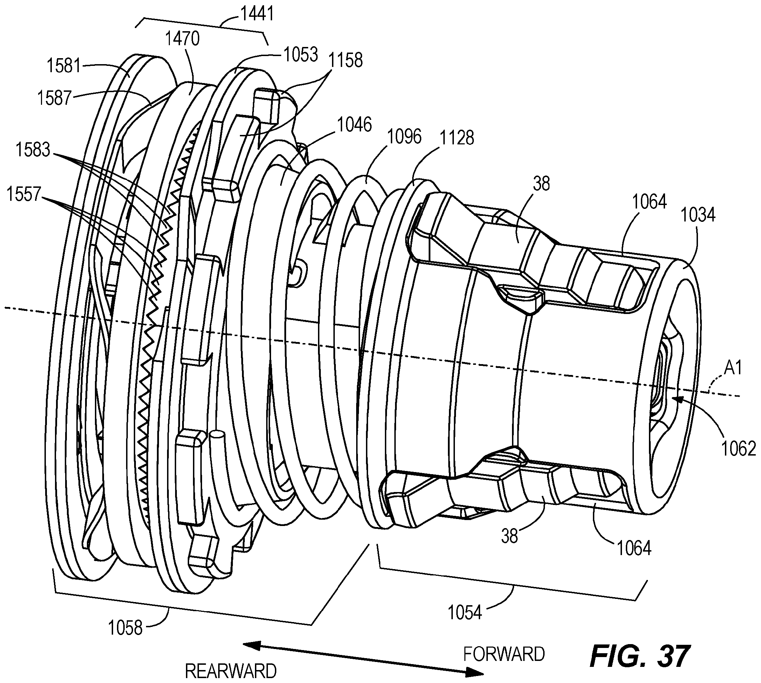

FIGS. 36 and 37 illustrate the locking assembly 1441, which is positioned within the collar 1442 and rearward of the plate 1446. The locking assembly 1441 is configured to increase the torque required to rotate the collar 1442 about the central axis A1. In one exemplary use case, the additional torque required to rotate the collar 1442 prevents the rotational inertia of the chuck assembly 1410 from unintentionally rotating the collar 1442 with respect to the body 1034. The locking assembly 1041 includes the plate teeth 1557 of the plate 1446, a locking plate 1470, and a locking spring 1581.

As shown in FIGS. 36, 37, and 39, the locking plate 1470 is positioned within the collar 1442 and rearward of the plate 1446 on the body 1034. The locking plate 1470 includes a plurality of locking teeth 1583 and a plurality of guide protrusions 1585. The plurality of locking teeth 1583 is formed on a forward-facing surface of the locking plate 1470 and is configured to engage the plurality of plate teeth 1557 of the plate 1446. The guide protrusions 1585 are inwardly extending within a centrally located aperture of the locking plate 1470 and are received in the plurality of channels 1073 formed on the body 1034. The guide protrusions 1585 are configured to limit the rotation of the locking plate 1470 with respect to the body 1034 while permitting axial movement of the locking plate 1470.

As shown in FIGS. 36 and 37, the locking spring 1581 is positioned within the collar and surrounds the body 1034. Additionally, the locking spring 1581 is positioned between the locking plate 1470 and a spring retaining clip 1587 coupled to the collar 1442. In the illustrated embodiment, the locking spring 1581 is a wave spring, but in other embodiments, the locking spring 1581 may be a coil spring, an elastomeric spring, or a Belleville spring. The locking spring 1581 is configured to bias the locking plate 1470 towards the plate 1446 to ensure engagement between the locking teeth 1583 and the plate teeth 1557.

In use, the user selects a tool bit 14 to insert into the tool bit aperture 1062 of the tool chuck assembly 1410. The user applies torque in the loosening direction to the collar 1442 and must overcome the torque threshold set by the locking assembly 1441. If the torque is greater than the torque threshold, the collar 1442 and the plate 1446 rotate about the central axis A1 in a loosening direction. When the user applies a torque greater than a torque threshold to the collar 1442, the plate teeth 1557 of the plate 1446 begins to slide out of engagement with the locking teeth 1583, which in turn moves the locking plate 1470 rearward and compresses the locking spring 1581. As the collar 1442 continues to turn, the plate teeth 1557 slide further out of engagement with the locking teeth 1583, until the plate teeth 1557 slide past the tips of the locking teeth 1583. Now, the locking spring 1581 biases the locking plate 1470 forward, so the locking teeth 1583 reengage adjacent plate teeth 1557. The disengagement and re-engagement of the plate teeth 1557 and the locking teeth 1583 occur repeatedly while the collar 1442 is rotated. The collar 1442 and the plate 1446 are rotated until the internally threaded portions 1562 of the plate 1446 contact the limiting arms 1049 of the rotation limiter 1048. When the internally threaded portions 1562 contact the limiting arms 1049, the internally threaded portions 1562 of the plate 1246 are aligned with the gaps 1069.

When the internally threaded portions 1562 of the plate 1446 are aligned with the gaps 1069, the plate 1446 and the collar 1442 are moveable forward along the central axis A1 against the biasing force of the spring 1096. As the collar 1442 is moved forward, clearance is formed between the jaw engaging portion 1306 and the outer side 80 of each of the jaws 38. The user can then insert the shank 18 of the tool bit 14 into the tool bit aperture 1062 of the body 1034. As the tool bit 14 is inserted, the rear end of the shank 18 engages the jaws 38 to displace the jaws 38 outwardly enough to accommodate the outer dimension of the shank 18. The shank 18 may then be fully inserted into the chuck assembly 1410.

Once inserted, the user may release the collar 1442, which moves rearward under the influence of the spring 1096. As the collar 1442 moves rearward, the jaw engaging portion 1506 bears against the jaws 38 to move the jaws 38 radially inward within the tool bit aperture 1062 to a position corresponding with one of the first, second, or third nominal sizes 22, 26, 30. The jaws 38 will continue to move radially inward until the tool engaging side 82 contacts the tool bit 14. Additionally, a projecting rib 86 engages the groove 20 in the tool bit 14, which limits the axial movement of the tool bit 14 in the chuck assembly 1410.

Next, the user applies torque in the tightening direction to the collar 1442 and must overcome the torque threshold set by the locking assembly 1441. If the torque is greater than the torque threshold, the collar 1442 and the plate 1446 rotate about the central axis A1 in a tightening direction. When the user applies a torque greater than a torque threshold to the collar 1442, the plate teeth 1557 begins to slide out of engagement with the locking teeth 1583, which in turn moves the locking plate 1470 rearward and compresses the locking spring 1581. As discussed above, rotation of the collar 1442 results the disengagement and re-engagement of the plate teeth 1557 and the locking teeth 1583 repeatedly. Rotation of the plate 1446 in the tightening direction causes the internally threaded portions 1562 to slide from the gaps 1069 into the axial space between the externally threaded portions 1067. Further rotation of the plate 1446 threads the internally threaded portions 1562 onto the externally threaded portions 1067, and the plate 1446 and the collar 1442 move axially rearward as guided by the pitch of the externally threaded portions 1067. The additional rearward axial movement causes the jaw engaging portion 1506 of the collar 1442 to further press against the jaws 38 to retain the tool bit 14. Now, the tool bit 14 is inserted and held in the tool bit aperture 1062 by the jaws 38.

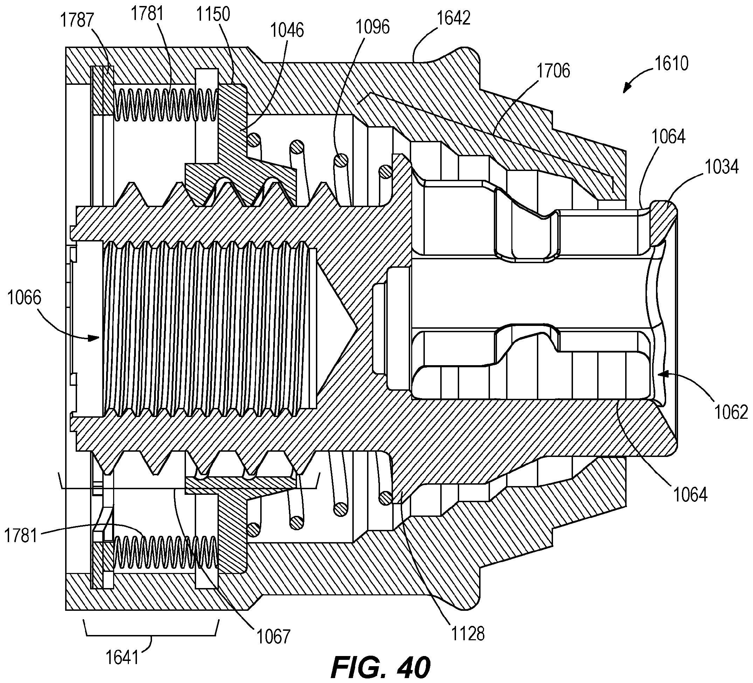

FIG. 40 illustrates another embodiment of a chuck assembly 1610 configured to quickly receive and secure tool bits with standard-sized shanks of three different predetermined, nominal sizes (e.g., ¼-inch, 3/8-inch, and 7/16-inch). In other embodiments, the chuck assembly 1610 may receive and secure tool bits with two standard-sized shanks, or four or more sized shanks. The chuck assembly 1610 is similar in some aspects to the chuck assembly 1010, with like parts having like reference numerals plus "1600." Accordingly, the following description focuses primarily on differences between the chuck assembly 1610 and the chuck assembly 1010. The illustrated chuck assembly 1610 includes the body 1034, the plurality of jaws 38, a collar 1642, the plate 1046, the rotation limiter 1048, the spring 1096, and a locking assembly 1641.

As shown in FIG. 40, the collar 1642 surrounds the body 1034 and includes a jaw-engaging portion 1706 on an interior side. The collar 1642 is rotatable about the central axis A1 and is axially moveable along the central axis A1. Additionally, the collar 1642 receives a portion of the locking assembly 1641.

With continued reference to FIG. 40, the locking assembly 1641 is positioned within the collar 1642 and rearward of the plate 1046. The locking assembly 1641 is configured to increase the torque required to rotate the collar 1642 about the central axis A1. In one exemplary use case, the additional torque required to rotate the collar 1642 prevents the rotational inertia of the chuck assembly 1610 from unintentionally rotating the collar 1642 with respect to the body 1034. The locking assembly 1641 includes a locking spring 1781 and a spring retaining clip 1787. The locking spring 1781 applies an axial force on the plate 1046 to press the internally threaded portions 1162 against the externally threaded portions 1067 of the body 1034. The axial force pressing the internally threaded portions 1162 against the externally threaded portions 1067 increases the static friction between the plate 1046 and the body 1034. The spring retaining clip 1787 is coupled to the collar 1642 and axially retains the locking spring 1781 within the collar 1642. In some embodiments, the spring retaining clip 1787 may include a spring boss configured to maintain the position of the locking spring 1781.

In use, the user selects a tool bit 14 to insert into the tool bit aperture 1062 of the tool chuck assembly 1610. The user applies torque in the loosening direction to the collar 1642 and must overcome the torque threshold set by the locking assembly 1641. The torque threshold is based on static friction between the plate 1046 and the body 1034 and is dependent on the spring force of the locking spring 1781. When the user applies a torque greater than a torque threshold to the collar 1642, the collar 1642 and the plate 1046 are rotated until the internally threaded portions 1162 of the plate 1046 contact the limiting arms 1049 of the rotation limiter 1048. When the internally threaded portions 1162 contact the limiting arms 1049, the internally threaded portions 1162 of the plate 1046 are aligned with the gaps 1069.

When the internally threaded portions 1162 of the plate 1046 are aligned with the gaps 1069, the plate 1046 and the collar 1642 are moveable forward along the central axis A1 against the biasing force of the spring 1096. As the collar 1642 is moved forward, clearance is formed between the jaw engaging portion 1706 and the outer side 80 of each of the jaws 38. The user can then insert the shank 18 of the tool bit 14 into the tool bit aperture 1062 of the body 1034. As the tool bit 14 is inserted, the rear end of the shank 18 engages the jaws 38 to displace the jaws 38 outwardly enough to accommodate the outer dimension of the shank 18. The shank 18 may then be fully inserted into the chuck assembly 1610.

Once inserted, the user may release the collar 1642, which moves rearward under the influence of the spring 1096. As the collar 1642 moves rearward, the jaw engaging portion 1506 bears against the jaws 38 to move the jaws 38 radially inward within the tool bit aperture 1062 to a position corresponding with one of the first, second, or third nominal sizes 22, 26, 30. The jaws 38 will continue to move radially inward until the tool engaging side 82 contacts the tool bit 14. Additionally, a projecting rib 86 engages the groove 20 in the tool bit 14, which limits the axial movement of the tool bit 14 in the chuck assembly 1210.

Next, the collar 1642 and the plate 1046 is rotated in a tightening direction. Rotation of the plate 1046 in the tightening direction causes the internally threaded portions 1162 to slide from the gaps 1069 into the axial space between the externally threaded portions 1067. Further rotation of the plate 1046 threads the internally threaded portions 1162 onto the externally threaded portions 1067, and the plate 1046 and the collar 1642 move axially rearward as guided by the pitch of the externally threaded portions 1067. The additional rearward axial movement causes the jaw engaging portion 1706 of the collar 1642 to further press against the jaws 38 to retain the tool bit 14. Now, the tool bit 14 is inserted and held in the tool bit aperture 1062 by the jaws 38.

Various features and aspects of the present disclosure are set forth in the following claims.

## Claims

1. A chuck assembly for a rotary power tool, the chuck assembly comprising:
a body rotatable about a central axis, the body including a plurality of openings and a first set of threads;
a plurality of jaws received within the plurality of openings in the body;
a collar surrounding the body, the collar including a stepped portion configured to engage the plurality of jaws to limit radial movement of the plurality of jaws;
a second set of threads coupled for co-rotation with the collar and engageable with the first set of threads on the body such that rotation of the collar relative to the body causes the collar to move axially along the body; and
a spring biasing the collar such that the stepped portion is biased into engagement with the plurality of jaws.

2. The chuck assembly of claim 1, further comprising a plate coupled for co-rotation with the collar, the plate including a central aperture, wherein the body extends through the central aperture.

3. The chuck assembly of claim 2, wherein the second set of threads is formed in the plate about a periphery of the central aperture.

4. The chuck assembly of claim 3, wherein the spring has a first end that engages the body and a second end that engages the plate.

5. The chuck assembly of any preceding claim, wherein the spring is a conical coil spring.

6. The chuck assembly of any one of claims 2-4, wherein the plate has a non-uniform thickness.

7. The chuck assembly of claim 6, wherein the plate has a greater thickness proximate the central aperture than proximate an outer periphery of the plate.

8. The chuck assembly of any preceding claim, wherein each thread of the second set of threads includes a recess configured to receive an end of a respective thread of the first set of threads.

9. The chuck assembly of claim 8, wherein an axial movement of the collar is limited when the end of the respective thread is received in the recess.

10. The chuck assembly of any preceding claim wherein each jaw of the plurality of jaws includes a stepped outer surface engageable with the stepped portion of the collar.

11. A chuck assembly for a rotary power tool, the chuck assembly comprising:
a body rotatable about a central axis, the body including a plurality of openings and an external threaded portion;
a plurality of jaws received within the plurality of openings in the body;
a collar surrounding the body, the collar including a stepped portion configured to engage the plurality of jaws;
a plate coupled for co-rotation with the collar, the plate having an internal threaded portion configured to engage the external threaded portion of the body such that, when engaged, rotation of the collar and the plate relative to the body causes the collar and the plate to move axially along the body; and
a locking assembly configured to selectively prevent rotation of the collar and the plate relative to the body.

12. The chuck assembly of claim 11,
further comprising a sleeve surrounding the collar, the sleeve rotatable with respect to the collar for a first distance and rotatable together with the collar when the sleeve is rotated a distance greater than the first distance;
and/or
further comprising a spring biasing the collar such that the stepped portion is biased into engagement with the plurality of jaws, wherein the spring is preferably a conical spring;
and/or
further comprising a rotation limiter coupled to the body, the rotation limiter including an arm extending along the external threaded portion and engageable with the internal threaded portion of the plate to limit the rotation of the plate.

13. The chuck assembly of claim 12, wherein the locking assembly includes:
a ratchet plate having a plurality of ratchet teeth formed on an outer surface of the ratchet plate;
a pawl ring positioned within the collar, the pawl ring including a plurality of pawl arms configured to engage the plurality of ratchet teeth of the ratchet plate; and
a plurality of lifter arms coupled to the sleeve, the plurality of lifter arms configured to disengage the pawl arms from the plurality of ratchet teeth in response to rotation of the sleeve,
wherein the locking assembly includes a locked state in which the pawl arms engage the plurality of ratchet teeth and rotation of the collar relative to the body is permitted in a first direction about the central axis and prevented in a second direction opposite a first direction about the central axis;
wherein the locking assembly includes an unlocked in which the locking arms move the pawl arms out of engagement with the plurality of ratchet teeth and rotation of the collar relative to the body is permitted in both the first direction and the second direction about the central axis.

14. The chuck assembly of any one of claims 11-13, wherein the locking assembly includes:
a plurality of first teeth formed on the plate;
a locking plate coupled to the body for co-rotation, the locking plate movable axially along the body, the locking plate including a plurality of second teeth configured to selectively engage the plurality of first teeth; and
a locking spring biasing the locking plate along the central axis to contact the plate;
and, optionally,
wherein rotation of the collar with a torque greater than a torque threshold causes the locking plate to move axially away from the plate against the bias of the locking spring, allowing the plurality of first teeth to slip over the plurality of second teeth.

15. A chuck assembly for a rotary power tool, the chuck assembly comprising:
a body rotatable about a central axis, the body including a plurality of openings and a plurality of sizing groove sets formed on the body, each sizing groove set including a plurality of helical grooves;
a plurality of jaws received within the plurality of openings in the body;
a collar surrounding the body, the collar configured to rotate around the central axis and move axially along the central axis relative to the body, the collar configured to engage the plurality of jaws; and
a plurality of projections coupled to the collar and configured to move with the collar relative to the body, wherein the plurality of projections is configured to engage the plurality of sizing groove sets;
and, optionally,
wherein each of the plurality of sizing groove sets includes an axial groove extending through the plurality of helical grooves;
and, further optionally,
wherein each projection of the plurality of projections is configured to slide along the axial groove of a respective one of the plurality of sizing groove sets when the collar moves axially along the central axis.
